# EUROPEAN PATENT SPECIFICATION

(11) **EP 2 415 359 B1**
(45) Date of publication and mention of the grant of the patent: **19.04.2017**
(21) Application number: 10758793.3
(22) Date of filing: 31.03.2010
(51) Int. Cl.: A23L 27/22, A23L 27/21

(54) **USE OF PEPTIDES FOR IMPARTING KOKUMI**
VERWENDUNG VON PEPTIDEN ZUR HERSTELLUNG EINES KOKUMI GESCHMACKS
UTILISATION DES PEPTIDES CONFERRANT UN SAVEUR KOKUMI

(30) Priority: 01.04.2009 JP 2009089347; 22.12.2009 JP 2009291151
(43) Date of publication of application: 08.02.2012
(73) Proprietor: Ajinomoto Co., Inc., Tokyo, 104-8315 (JP)
(72) Inventor: FUTAKI Fumie, Kawasaki-shi Kanagawa 210-8681 (JP); YASUDA Reiko, Kawasaki-shi Kanagawa 210-8681 (JP); SATO Seiichi, Kawasaki-shi Kanagawa 210-8681 (JP); MIYAKI Takashi, Kawasaki-shi Kanagawa 210-8681 (JP); MIYAMURA Naohiro, Kawasaki-shi Kanagawa 210-8681 (JP); ETO Yuzuru, Kawasaki-shi Kanagawa 210-8681 (JP)
(74) Representative: Strehl Schübel-Hopf & Partner
(86) International application number: PCT/JP2010/055856
(87) International publication number: WO 2010/114022

(56) References cited:
- WO-A1-01/39613
- WO-A1-2007/055393
- WO-A1-2007/066430
- WO-A1-2007/066430
- WO-A1-2008/139945
- JP-A- 4 091 797
- JP-A- 61 115 464
- KOIZUMI O; HARAGUCHI Y; OHUCHIDA A: "Reaction chain in feeding behavior of hydra: Different specificities of three feeding responses", JOURNAL OF COMPARATIVE PHYSIOLOGY, vol. 150, no. 1, 31 December 1983 (1983-12-31), pages 99-105, XP009187478, Springer

## Description

### Technical Field

The present invention relates to the use of a kokumi-imparting agent and a complex kokumi-imparting agent, which consist of a peptide showing a CaSR agonist activity. Moreover, the present invention also relates to a seasoning composition which comprises a peptide showing a CaSR agonist activity in a concentration of not less than a predetermined level.

### Background Art

The consumers' demands on the taste and palatability of foods have recently been increased due to, for instance, the diversity of the human eating habits. In this connection, the taste and palatability of a food have conventionally been expressed by the five basic tastes, in other words, a sweet taste, a salty taste, a sour taste, a bitter taste and umami (deliciousness), but there has correspondingly been increased the needs for the development of an excellent kokumi-imparting agent capable of imparting, to a food, a "kokumi" which can impart, to a food, further improved tastes intensified even in, for instance, the thickness, the growth (or mouthfulness), the continuity and the harmony as the marginal tastes of the foregoing five basic tastes, which cannot be expressed only by these five basic tastes.

On the other hand, the calcium sensing receptor (CaSR) is also referred as the calcium receptor, the signals outputted from the receptor can control a variety of biological functions within the living bodies and the substances possessing such a CaSR agonist activity can be used as a kokumi-imparting agent (see Patent Documents 1, 3 and Non-patent Document 4 as will be specified below).

There would be a variety of taste-developing patterns in the foregoing "kokumi". In this respect, there has been an intensive need, in particular, for the development of a kokumi-imparting agent capable of imparting the kokumi, to a food, and having such a taste-developing pattern that it can develop or present the kokumi of the initial taste type one. Moreover, the substance for imparting the kokumi would in general be used in, for instance, foods and accordingly, it should be excellent in its stability. In addition, the substance for imparting the kokumi should be able to be easily produced at a low cost from the industrial standpoint.

Accordingly, there have been desired for the search for a variety of compounds possessing the desired CaSR agonist activity to thus find out a substance capable of imparting a kokumi to other substance (foods or drinks), which shows a more excellent kokumi-imparting effect, in particular, a kokumi-imparting effect of the initial taste-imparting type one, which is excellent in the stability and which can easily be produced at a low cost and to thereby provide a kokumi-imparting agent consisting of such a substance as well as a complex kokumi-imparting agent comprising the substance and other substances possessing the CaSR agonist activities in combination.

On the other hand, regarding some *γ*-glutamyl peptides each carrying a *γ* -glutamine residue at the N-terminal thereof, there have been known those synthesized as substrates, for instance, in the studies of the enzymatic activities (see Patent Document 2 and Non-patent Documents 1 to 3, specified later), but there have not yet been known any case in which *γ*-Glu-Abu is used as a kokumi-imparting agent or a seasoning or further as an ingredient of a food.

### Prior Literature

### Patent Document:

Patent Document 1: International Patent Laid-Open No. 2007/055393, Pamphlet;
Patent Document 2: International Patent Laid-Open No. 2007/066430, Pamphlet;
Patent Document 3: International Patent Laid-Open No. 2008/139945, Pamphlet;

### Non-Patent Documents:

Non-Patent Document 1: Molecular Pharmacology (1982), 21(3), 629-36;
Non-Patent Document 2: Agricultural and Biological Chemistry (1981), 45(12), 2839-45;
Non-Patent Document 3: Journal of Biological Chemistry (1979), 254(12), 5184-90;
Non-Patent Document 4: Journal of Biological Chemistry, (2010), 285 (2), 1016-22.

### Summary of the Invention

### Problems That the Invention is to Solve

It is an object of the present invention to search for a variety of compounds possessing the desired CaSR agonist activity to thus find out a substance capable of imparting a kokumi, which shows a more excellent kokumi-imparting effect, in particular, a kokumi-imparting effect of the initial taste-imparting type one, which is excellent in the stability and which can easily be produced at a low cost and to thereby provide a kokumi-imparting agent consisting of such a substance as well as a complex kokumi-imparting agent comprising the substance and other substances possessing the CaSR agonist activities in combination. It is a further object of the present invention to provide a seasoning composition which comprises the foregoing substance in a concentration of not less than the predetermined level.

### Means for the Solution of the Problems

As a result of searching for a variety of compounds, the inventors of this invention have surprisingly found out that *γ*-Glu-Abu (L-*γ*-glutamyl-L-2-aminolactic acid) possesses a high CaSR agonist activity and a quite excellent kokumi-imparting effect and, in particular, the taste-developing pattern thereof would permit the impartment of a kokumi of the initial taste-imparting type to a subject. Furthermore, the inventors have found that *γ*-Glu-Abu thus discovered is excellent in the stability and has such a favorable taste-developing pattern that it has a stronger initial taste-imparting ability, as compared with those observed for *γ*-Glu-Cys as a dipeptide similar to the former. Moreover, *γ*-Glu-Abu thus discovered can serve, by itself, as a useful kokumi-imparting agent and a complex kokumi-imparting agent by combining the substance with other substances each showing a CaSR agonist activity and have thus completed the present invention.

More specifically, the present invention herein provides the use of a kokumi-imparting agent consisting of *γ*-Glu-Abu. According to the present invention, there is further provided a complex kokumi-imparting agent which comprises, in combination, (a) *γ*-Glu-Abu and (b) one or at least two amino acids or peptides selected from the group consisting of *γ*-Glu-X-Gly wherein X represents an amino acid or an amino acid derivative, *γ*-Glu-Val-Y wherein Y represents an amino acid or an amino acid derivative, *γ*-Glu-Ala, *γ*-Glu-Gly, *γ*-Glu-Cys, *γ*-Glu-Met, *γ*-Glu- Thr, *γ*-Glu-Val, *γ*-Glu-Orn, Asp-Gly, Cys-Gly, Cys-Met, Glu-Cys, Gly-Cys, Leu- Asp, D-Cys, *γ*-Glu-Met (O), *γ*-Glu-*γ*-Glu-Val, *γ*-Glu-Val-NH₂, *γ* -Glu-Val- ol, *γ*-Glu-Ser, *γ*-Glu-Tau, *γ*-Glu-Cys (S-Me) (O), *γ*-Glu-Leu, *γ* -Glu-Ile, *γ*-Glu-t-Leu and *γ*-Glu-Cys (S-Me).

According to the present invention there is also provided a complex kokumi-imparting agent which comprises, in combination, (a) *γ*-Glu-Abu and (b) one or at least two peptides selected from the group consisting of those represented by the following general formula: *γ*-Glu-X-OCH-(Z)- CO₂H (wherein X represents an amino acid or an amino acid derivative and Z represents H (a hydrogen atom) or a CH₃ group (a methyl group)); and those represented by the foregoing general formula: *γ*-Glu-Val-Y (wherein Y represents GlyA or LacA).

Further, the present invention herein provides a seasoning composition (hereunder also referred to as "seasoning composition of the present invention") which comprises *γ*-Glu-Abu in an amount of not less than 1,000 ppm by mass, preferably not less than 2,000 ppm by mass and more preferably not less than 2,500 ppm by mass.

There is also disclosed a method for the preparation of a food and a drink comprising the steps of adding an ingredient for a food or a drink, which contains *γ*-Glu-Abu in an amount of not less than 1,000 ppm by mass, preferably not less than 2,000 ppm by mass and more preferably not less than 2,500 ppm by mass to an ingredient for other foods and drinks and optionally treating or cooking the resulting mixture of these ingredients. The food or the drink or an intermediate product used for the production of a food or a drink, prepared according to the preparation method is provided.

In addition, the present invention further provides a food or a drink or an intermediate product for the preparation of a food or a drink, which comprises *γ* -Glu-Abu in an amount ranging from 20 to 200 ppm by mass; at least one organic acid or salt thereof selected from the group consisting of lactic acid, citric acid, malic acid and succinic acid and salts thereof in an amount ranging from 0.005 to 0.1% by mass; and common salt in an amount ranging from 0.01 to 0.5% by mass; as well as a carrier acceptable for foods and drinks, and/or one or at least two of ingredients for seasoning.

According to a further aspect of the present invention, there is also provided a method for enhancing the flavor and/or the taste of a food or a drink, which comprises the step of incorporating, into a food or a drink, a composition containing *γ*-Glu-Abu in an amount of not less than 400 ppm by mass, preferably not less than 1,000 ppm by mass, more preferably not less than 2,000 ppm by mass and further preferably not less than 2,500 ppm by mass.

### Effects of the Invention

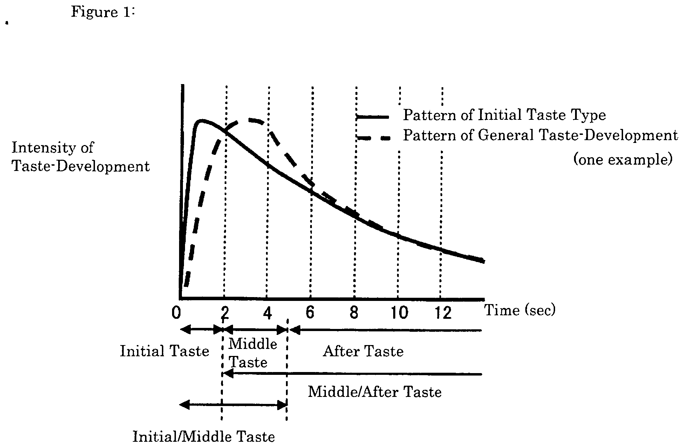

There is provided a kokumi-imparting agent which is quite excellent in its kokumi-imparting effect and, in particular, has an excellent and unique kokumi-imparting effect of the initial taste-imparting type one represented by, for instance, such a taste-developing pattern that it shows a profile as shown in, for instance, Fig. 1, which is also excellent in the stability and which can easily be prepared at a low cost, as well as a complex kokumi-imparting agent containing the same. In addition, the present invention can likewise provide an excellent seasoning composition which comprises a substance possessing an excellent kokumi-imparting effect in a concentration of not less than a predetermined level as outlined in claims 3 and 4.

The kokumi-imparting agent γ-Glu-Abu shows the flavor and/or taste-developing pattern quite similar to that observed for common salt and therefore, when using the kokumi-imparting agent, the latter can impart, to a low salt food or the like, a salty taste-like thick impression and an initial taste-punch (or impact) to the low salt food. Accordingly, the resulting food containing γ-Glu-Abu can maintain its salty taste impression like that prior to the reduction of the salt content even when the salt content of the food is reduced and therefore, γ-Glu-Abu permits the production of a food highly beneficial to health. Examples of such foods include a variety of soups and various kinds of sauces. Especially, if eating a food containing γ-Glu-Abu, the consumer can feel the salty taste-like thick impression and an initial taste-punch (or impact) immediately after eating the same.

### Brief Description of the Drawings

[Figure 1] Fig. 1 shows the taste and palatability profile (taste-developing pattern) observed for a kokumi-imparting agent of the initial taste type one.

### Mode for Carrying out the Invention

The kokumi-imparting agent used in the present invention consists of *γ* -Glu-Abu and it is sufficient that the agent essentially consists of *γ*-Glu-Abu from the viewpoint of the taste and accordingly, the agent may further comprise other components to such an extent that they do not exert any substantial influence on γ-Glu-Abu in respect of the taste thereof. *γ*-Glu-Abu can also be used in combination with at least one additional ingredient for seasonings selected from the group consisting of amino acids such as sodium glutamate (MSG), nucleic acids such as inosine monophosphate (IMP), inorganic salts such as sodium chloride, organic acids such as citric acid, and various kinds of yeast extracts to thus provide a favorable seasoning composition which is improved in its kokumi, as compared with those obtained by the use of such additional ingredients for seasonings individually. When using *γ*-Glu-Abu in combination with the foregoing additional ingredients for seasonings, the concentration of the latter can easily or properly be determined or established by one of ordinary skill in the art after conducting investigations through, for instance, the sensory test.

The seasoning composition of the present invention or one containing not less than 1,000ppm by mass of *γ*-Glu-Abu can likewise be combined with other ingredients for seasonings to thus provide more favorable separate seasonings.

In the present invention, the term "kokumi" means the taste which cannot be expressed by the five basic tastes or the sweet taste, the salty taste, the sour taste, the bitter taste and the umami and more specifically means the taste in which the marginal tastes of the basic ones such as the thickness, the growth (mouthfulness), the continuity and the harmony are enhanced in addition to the basic tastes. In addition, the term "kokumi-impartment" herein used means that the five basic tastes expressed by the sweet taste, the salty taste, the sour taste, the bitter taste and the umami are enhanced, while the marginal tastes of the basic tastes such as the thickness, the growth (mouthfulness), the continuity and the harmony associated with the former are simultaneously imparted to a subject. Moreover, this can also be referred to as the flavor-enhancing action. Therefore, *γ*-Glu-Abu serving as the kokumi-imparting agent of the present invention can likewise be referred to as a "flavor enhancer". The kokumi-imparting agent *γ*-Glu-Abu may also be used as a sweet taste enhancer, a salty taste enhancer, a sour taste enhancer, a bitter taste enhancer or an umami enhancer. Moreover, the taste of a food may vary with the elapse of time after eating the same and the taste of a food after eating the same is in general referred to as the initial taste, the middle taste and the after taste, in order, immediately after eating the food. Although they are indeed the relative concept, but the initial taste, the middle taste and the after taste of a subject are, as a whole, defined to be the taste observed within the term extending from 0 to 2 seconds, 2 to 5 seconds and not less than 5 seconds after eating the same, respectively. The taste observed during the term extending from 0 to 5 seconds is herein referred to as the "initial/middle taste" and that observed during the term extending from 2 to about 30 seconds is referred to as the "middle/after taste" (see the data plotted on Fig. 1). Regarding the evaluation of the taste in case where the taste is divided into three subdivisions, it is difficult for the panelists (persons who eat the food to be examined) to concentrate their attention on the evaluation and the habitually used test comprises the evaluation of the taste while dividing it into two subdivisions.

The effects of a substance showing a CaSR activity on the kokumi and the taste-developing pattern can be confirmed by a method, for instance, a human sensory test for the evaluation of taste. An example of such a human sensory test for the evaluation of taste is one illustrated in Examples of this patent application, but the sensory test for the evaluation of taste usable herein is not restricted to this specific one.

The term "CaSR" used in this specification means the calcium sensing receptor which belongs to the class C of the 7-time transmembrane receptor and which is thus also referred to as "calcium receptor". The term "CaSR agonist" used in this specification means a substance which is linked with the foregoing CaSR to thus activate the receptor. In addition, the term "activate CaSR" used herein means that a ligand is linked with CaSR to thus activate a protein linked with guanine nucleotide and to transmit signals outputted from the same. Moreover, the ability of a substance to form a linkage with CaSR to thus activate the same is referred to as "CaSR agonist activity".

Now, a method for screening a compound having a CaSR agonist activity will specifically be presented hereunder, but the steps for screening the compound are not limited to those specified below at all.
1) A step for adding a test substance to a CaSR activity-measuring system used for determining the CaSR activity and a step for the determination of the CaSR activity;
2) A step for comparing the CaSR activity observed when adding the test substance to the activity-measuring system with that observed prior to the addition of the substance; and
3) A step for selecting a substance which shows the CaSR agonist activity when it is added to the CaSR activity-measuring system.

The determination of the CaSR activity can likewise be carried out while using, for instance, a measuring system which makes use of cells having an ability of expressing CaSR. The foregoing cells may be those endogeneously expressing CaSR or genetically recombinant cells into which a CaSR-expression gene is exogeneously introduced. The aforementioned CaSR activity-measuring system is not restricted to any specific one inasmuch as it permits the detection of the linkage (or a reaction) between the CaSR-activation substance and CaSR, or it can emit or output a detectable signal in response to the formation of the linkage (or a reaction) between the CaSR-activation substance and CaSR within the cells, when adding an extracellular ligand (activating substance) specific to CaSR to the foregoing cells having an ability of expressing CaSR. If the CaSR activity is detected through the reaction with a test substance, it would be judged that the test substance shows the desired CaSR-stimulation activity.

An example of the foregoing CaSR preferably used herein is human CaSR encoded by the human CaSR gene registered under the GenBank Accession Number of NM_000388. In this respect, however, the CaSR is not restricted to the protein encoded by the gene having the foregoing sequence of the registered CaSR and it may be any protein capable of being encoded by a gene having not less than 60%, preferably not less than 80% and more preferably not less than 90% of the sequence homology with the foregoing gene sequence, inasmuch as the protein encoded by such a gene possesses the CaSR function. In this connection, the CaSR function can be examined by making cells express these genes and then determining any change of an electric current and/or any change in the calcium ion concentration within the cells observed when calcium is added to the system containing the cells.

Regarding the foregoing CaSR, the source thereof is not restricted to any particular one and it may be those derived from the whole kinds of animals including mice, rats and canines, in addition to the foregoing human CaSR.

As has been discussed above, the CaSR activity can be confirmed through the use of the living cells capable of expressing CaSR or a fragment thereof, the cell membranes which can express CaSR or a fragment thereof, or an in vitro system including CaSR or a protein as a fragment thereof.

An example which makes use of living cells will be given below, but the present invention is by no means limited to this example at all.

CaSR is expressed in cultured cells such as oocytes of xenopus, ovarian cells derived from hamsters, and human fetal renal cells. This expression of CaSR can be carried out by introducing, into a plasmid possessing an exogenous gene, the CaSR gene which has been subjected to the cloning treatment in the form of a plasmid or cRNA obtained using the same as a template. Usable for the detection of such a reaction may be an electrophysiological means or a fluorescent indicator for the detection of any increase of the calcium concentration within the cells.

The expression of CaSR is initially confirmed by the presence of any response observed when adding calcium or an activator having the specificity thereto. More specifically, usable herein as the desired cells are those in which an intracellular electric current is detected when adding calcium in a concentration of about 5 mM or those in which the emission of fluorescent rays are observed upon the addition of a fluorescent indicator. In this connection, the concentration of calcium added to the cells is variously changed to determine any calcium concentration-dependency of the intensity of the intracellular electric current. Then a test substance is diluted to a concentration ranging from about 1 *µ* M to 1 mM, the resulting dispersion is added to oocytes or cultivated cells and subsequently the CaSR activity in the presence of the foregoing test substance is measured to thus determine the CaSR agonist activity of the test substance.

More specifically, usable herein as such a test for the determination of the CaSR agonist activity is, for instance, the test illustrated in Test Examples disclosed in this specification, but the activity-determining test is not limited to such a specific one at all.

The amino acids or peptides used in the kokumi-imparting agent according to the present invention in combination with *γ*-Glu-Abu include, for instance, one or at least two amino acids or peptides selected from the group consisting of *γ* -Glu-Abu and *γ*-Glu-X-Gly (wherein X represents an amino acid or an amino acid derivative), *γ*-Glu-Val-Y (wherein Y represents an amino acid or an amino acid derivative), *γ*-Glu-Ala, *γ*-Glu-Gly, *γ*-Glu-Cys, *γ*-Glu-Met, *γ*-Glu- Thr, *γ* -Glu-Val, *γ*-Glu- Orn, Asp-Gly, Cys-Gly, Cys-Met, Glu-Cys, Gly-Cys, Leu-Asp, D-Cys, *γ*-Glu-Met (O), *γ*-Glu-*γ*-Glu-Val, *γ*-Glu-Val-NH₂, *γ*-Glu-Val-ol, *γ* -Glu-Ser, *γ*-Glu-Tau, *γ*-Glu-Cys (S-Me) (O), *γ*-Glu-Leu, *γ*-Glu-Ile, *γ* -Glu-t-Leu and *γ*-Glu-Cys (S-Me). In this respect, the amino acids may likewise include, for instance, neutral amino acids such as Gly, Ala, Val, Leu, Ile, Ser, Thr, Cys, Met, Asn, Gln, Pro, Hyp, t-Leu; acidic amino acids such as Asp, Glu; basic amino acids such as Lys, Arg, His; aromatic amino acids such as Phe, Tyr, Trp; as well as homoserine, citrulline, ornithine, *α*-aminobutyric acid, norvaline, norleucine, and taurine. Moreover, the amino acids used herein may also be artificial amino acids (having non-proteinaceous construction) such as tert-leucine, cyclo-leucine, *α*-aminoiso- butyric acid, L-penicillamine, allothreonine, and allo-isoleucine. In this connection, in the peptide: *γ*-Glu-X-Gly, X may be the aforementioned amino acid or derivative thereof, but preferably used herein are amino acids or derivatives thereof other than Cys.

In addition, the amino acids or peptides used in combination with *γ* -Glu-Abu in the kokumi-imparting agent of the present invention may be peptide derivatives each having a structure represented by the formula: *γ* γ-Glu-X-OCH-(Z)CO₂H, wherein X represents an amino acid or an amino acid derivative and Z represents H (hydrogen atom) or CH₃ (methyl group). Moreover, the amino acids or peptides used herein may likewise be the compounds represented by the foregoing general formula: *γ*-Glu-Val-Y in which Y represents GlyA or LacA. Specific examples thereof preferably used herein are *γ*-Glu-Val-GlyA, *γ*-Glu-tLeu-GlyA, *γ*-Glu-Abu-GlyA, *γ*-Glu-Val-LacA, *γ*-Glu-tLeu-LacA and *γ*-Glu-Abu-LacA. In this respect, the term "GlyA" herein used means glycolic acid and LacA means butyric acid. Butyric acid may be either its S-isomer or its R-isomer, but it is preferably the S-isomer thereof. The following are the structural formulas of these compounds:

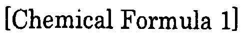

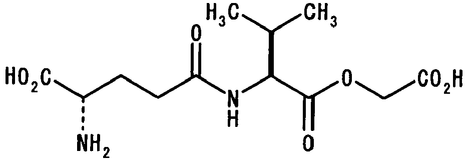

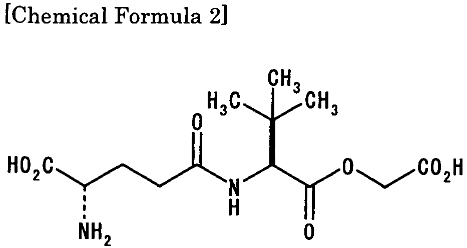

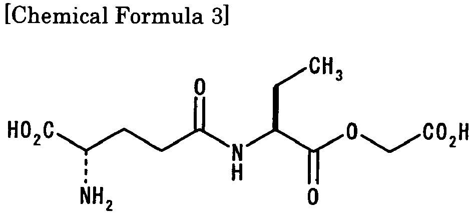

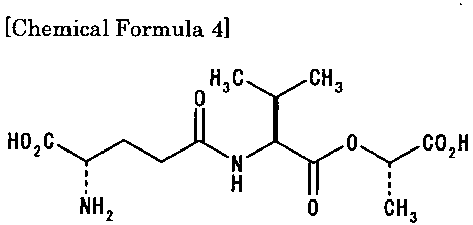

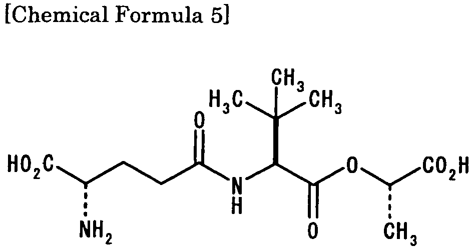

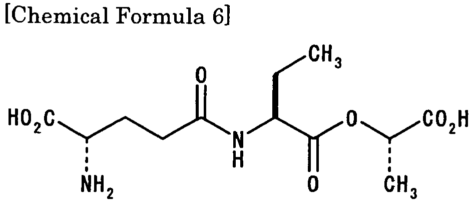

In particular, the kokumi-imparting agent used according to the present invention consists of *γ*-Glu-Abu and this agent has a unique and excellent initial taste type kokumi-imparting effect and the taste-developing profile as shown in Fig. 1. Accordingly, it is preferred that *γ*-Glu-Abu is used in combination with a peptide such as *γ*-Glu-Val-Gly, which shows a taste-developing profile different from that of the former.

In the specification of this patent application, each amino acid (residue) is expressed in terms of the following abbreviated form:
- (1) Gly:: glycine;
- (2) Ala:: alanine;
- (3) Val:: valine;
- (4) Leu:: leucine;
- (5) Ile:: isoleucine;
- (6) Met:: methionine;
- (7) Phe:: phenylalanine;
- (8) Tyr:: tyrosine;
- (9) Trp:: tryptophane;
- (10) His:: histidine;
- (11) Lys:: lysine;
- (12) Arg:: arginine;
- (13) Ser:: serine;
- (14) Thr:: threonine;
- (15) Asp:: aspartic acid;
- (16) Glu:: glutamic acid;
- (17) Asn:: asparagine;
- (18) Gln:: glutamine;
- (19) Cys:: cysteine;
- (20) Pro:: proline;
- (21) Orn:: ornithine;
- (22) Sar:: sarcosine;
- (23) Cit:: citrulline;
- (24) N-Val: (or Nva):: norvaline (2-aminovaleric acid);
- (25) N-Leu (or Nle):: norleucine;
- (26) Abu:: *α* -aminobutyric acid;
- (27) Tau:: taurine;
- (28) Hyp:: hydroxy-proline;
- (29) t-Leu:: tert-leucine;
- (30) Cle:: cyclo-leucine;
- (31) Aib:: *α* -amino-isobutyric acid (2-methyl-alanine);
- (32) Pen:: L-penicillamine;
- (33) allo-Thr:: allothreonine;
- (34) allo-Ile:: allo-isoleucine.

Furthermore, the term "amino acid derivative" used herein means a variety of derivatives of the foregoing amino acids and specific examples thereof include special amino acids and artificial amino acids, amino alcohols, or amino acids whose side chains such as terminal carboxyl groups, amino groups and/or thiol group of cysteine are substituted with a variety of substituents. Examples of such substituents include an alkyl group, an acyl group, a hydroxyl group, an amino group, an alkylamino group, a nitro group, a sulfonyl group or a variety of protective groups. Thus, examples of such amino acid derivatives include Arg (NO₂): N-*γ*-nitro-alginine, Cys (SNO): S-nitro-cysteine, Cys (S-Me): S-methyl cysteine, Cys (S-allyl): S-allyl cysteine, Val-NH₂: valine-amide, and Val-ol: valinol (2-amino-3- methyl-1-butanol). In the meantime, the peptide: *γ* -Glu-Cys(SNO)-Gly used herein is one represented by the following structural formula and the symbol: "(O)" appearing in the foregoing formulas: *γ*-Glu-Met (O) and *γ*-Glu-Cys (S-Me) (O) means that these peptides each have a sulfoxide structure. The symbol "(*γ*)" of *γ*-Glu means that another amino acid is linked with the glutamic acid through the carboxyl group situating at the *γ*-position of the latter.

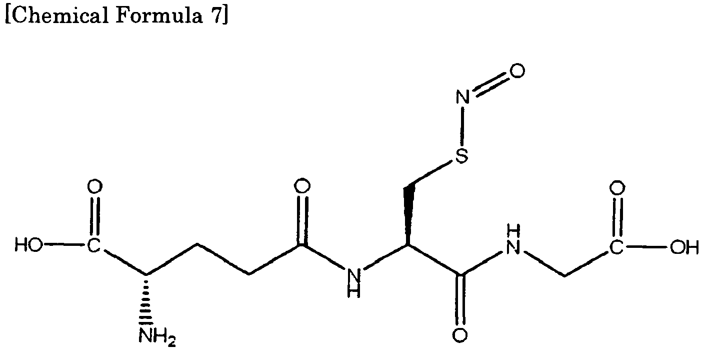

### S-Nitrosoglutathione (GNSO)

The *γ*-Glu-Abu used in this specification means L-*γ*-glutamyl-L-2-aminobutyric acid. The *γ*-Glu-Abu and the amino acids and peptides used in combination in the present invention may be commercially available ones if they can be purchased on the market, or can be obtained according to any known technique such as (1) chemical synthetic methods or (2) a method which makes use of an enzyme reaction, but it would be more convenient to use a chemical synthetic technique. The *γ*-Glu-Abu used in the present invention is very short in its length since it includes only two amino acid residues and therefore, it is more convenient to adopt a chemical synthetic technique. More specifically, it can be produced simply and at a low cost as compared with any tripeptide comprising three amino acid residues and accordingly, the use of this dipeptide is quite advantageous from the industrial standpoint. In addition, when chemically synthesizing the *γ*-Glu-Abu used in the present invention and the amino acids and peptides used in combination therewith, the preparation thereof may be carried out by synthesizing or semi-synthesizing these oligo-peptides while using a peptide-synthesis device. As such a method for chemically synthesizing these peptides, usable herein may be, for instance, the solid-phase peptide-synthesis technique. The peptide thus produced can subsequently be purified according to the usual techniques such as the ion- exchange chromatography technique, the reversed phase high performance liquid chromatography technique, or the affinity chromatography technique. Such a solid phase peptide-synthesis technique and the subsequently used peptide- purification technique are well known in the field of this art.

Alternatively, when producing the *γ*-Glu-Abu used in the present invention and the amino acids and peptides used in combination therewith, while making use of an enzyme reaction, the preparation thereof may be carried out by the use of the method disclosed in the pamphlet of International Patent Laid-Open WO 2004/ 011653. More specifically, they can be prepared by reacting an amino acid or a peptide, in which one of the terminal carboxyl group thereof is esterified or aminated, with another amino acid whose amino group is in its free state (for instance, an amino acid whose carboxyl group is protected) in the presence of a peptide-forming enzyme and then purifying the resulting dipeptide or tripeptide. Examples of such peptide-forming enzymes are cultures of microorganisms showing the ability of producing a peptide; the cell bodies of microorganisms isolated from the culture; or a product obtained by processing the cell bodies of the microorganisms, or a peptide-forming enzyme originated from the microorganisms.

In addition to the foregoing enzymatic production methods and chemical synthesis methods, the peptides used in the present invention are often included in naturally occurring products, for instance, plants such as vegetables and fruits, microorganisms such as yeast and other natural resources. When they are present in naturally occurring substances, they can be isolated from the same and the resulting isolated products can likewise be used in the present invention.

The kokumi-imparting agent or the complex kokumi-imparting agent according to the present invention can be used as a seasoning without any particular post-treatment or can be mixed with carriers acceptable for foods and drinks or ingredients for other seasonings to thus give various seasonings. Examples of such other ingredients for seasonings include spices, saccharides, sweeteners, edible fibers, vitamins, amino acids such as sodium glutamate (MSG), nucleic acids such as inosine monophosphate (IMP), inorganic salts such as sodium chloride, and organic acids such as citric acid or salts thereof as well as various kinds of yeast extracts.

Incidentally, low salt foods preferred as food compositions each comprising the kokumi-imparting agent or the complex kokumi-imparting agent according to the present invention are, by nature, those containing common salt and, in particular, foods whose common salt content is reduced. The low salt foods include not only those in the solid form, but also those in the liquid form, and the term "low salt food" is synonymous with the "low salt food and drink".

Examples of such low salt foods include dairy products such as butter and cheese; animal oils and fats-containing and/or vegetable oils and fats-containing foods such as margarine, sauces and roux; emulsified foods such as dressings and mayonnaise; various kinds of curry and stew; various kinds of snack foods; and a variety of soups containing meat extracts or essences of meat and/or cream. Moreover, such low salt foods likewise include, for instance, fermented or brewed foods such as miso and soy sauce; soups or broths and sauces which make use of such fermented or brewed foods; processed vegetable foods such as salted vegetables and pickles meat-processed products such as hams and sausage; processed marine products such as boiled fish paste, dried marine products and foods boiled down in soy; cooked meat balls, hamburger steak; fried foods; and grilled chicken. Among these, preferred low salt foods are those having a common salt concentration, upon eating the same, ranging from 0.01 to 0.5% by mass. Moreover, it is also preferred to use at least one member selected from the group consisting of organic acid such as lactic acid, citric acid, malic acid and succinic acid, and salts thereof in combination with common salt, in an amount ranging from 0.005 to 0.1% by mass. The use of these ingredients in combination would permit the further improvement of the salty taste-enhancing effect of the kokumi-imparting agent γ-Glu-Abu.

According to the present invention, there is also provided a food or drink comprising 20 to 200 ppm by mass of *γ*-Glu-Abu and 0.01 to 0.5% by mass of common salt. In this respect, it is preferred that the food or drink further comprises at least one member selected from the group consisting of organic acid such as lactic acid, citric acid, malic acid and succinic acid, and salts thereof in a concentration ranging from 0.005 to 0.1% by mass.

If γ-Glu-Abu is incorporated into the foregoing low salt foods, the foods would be able to give, to the consumer, a salty taste-like thick impression and an initial taste-punch (or impact) at the initial stage, when they eats these low salt foods.

The *γ*-Glu-Abu used in the present invention and the amino acids or peptides used in combination therewith may likewise include those in their salt form. If the *γ*-Glu-Abu used in the present invention and the amino acids or peptides used in combination therewith are present in their salt form, the salts are not restricted to specific ones insomuch as they are pharmacologically acceptable and specific examples thereof include ammonium salts, salts with alkali metals such as sodium and potassium, salts with alkaline earth metals such as calcium and magnesium, aluminum salts, zinc salts, salts with organic amines such as triethylamine, ethanolamine, morpholine, pyrrolidine, piperidine, piperazine and dicyclo-hexylamine, and salts with basic amino acids such as arginine and lysine, for the acidic groups such as carboxyl groups. Moreover, examples of the foregoing compounds likewise include salts with inorganic acids such as hydrochloric acid, sulfuric acid, phosphoric acid, nitric acid and hydrobromic acid; salts with organic acids such as acetic acid, citric acid, benzoic acid, maleic acid, fumaric acid, tartaric acid, succinic acid, tannic acid, butyric acid, hibenzoic acid, pamoic acid, enanthic acid, decanoic acid, theoclic acid, salicylic acid, lactic acid, oxalic acid, mandelic acid and malic acid; and salts with organic sulfonic acids such as methanesulfonic acid, benzenesulfonic acid and p-toluenesulfonic acid, for the basic groups of the compounds.

The kokumi-imparting agent used in the present invention or the complex kokumi-imparting agent according to the present invention can be used in any form such as dried powders, pastes, and solutions, without any restriction in the physical properties thereof.

The kokumi₋imparting agent used in the present invention or the complex kokumi-imparting agent according to the present invention can be used for incorporating into, for instance, foods, drinks and seasonings.

If the kokumi-imparting agent used in the present invention or the complex kokumi-imparting agent according to the present invention is used for incorporating into, for instance, foods, drinks and seasonings, the ultimate amount of the *γ*-Glu-Abu and that of the amino acid or peptide used in combination therewith are not restricted to any specific one inasmuch as they can ensure the achievement of the desired effects of the present invention, but the amount of *γ*-Glu-Abu and/or that of the amino acid or peptide each fall within the range of from about 1 ppb by mass to 99.9% by mass and preferably about 10 ppb by mass to 10% by mass and more preferably about 1 ppm by mass to 1% by mass on the basis of the total mass of each corresponding food, drink, seasoning or the like.

According to a further aspect of the present invention, there is also provided a method for the preparation of a seasoning composition which comprises the step of mixing γ-Glu-Abu with a carrier acceptable for the ingredients for other seasonings or foods and drinks. The concentration of *γ*-Glu-Abu in the seasoning composition thus prepared particularly preferably ranges from 400 to 500,000 ppm by mass. In particular, the method for the preparation of a seasoning composition according to the present invention preferably comprises the steps of mixing γ-Glu-Abu with the ingredients of another seasoning and controlling the concentration of *γ* -Glu-Abu in the seasoning composition thus prepared to a level ranging from 400 to 500,000 ppm by mass.

The present invention further provides a method for the preparation of a food or drink, which comprises the step of incorporating γ-Glu-Abu into an ingredient for other foods or drinks. The concentration of *γ*-Glu-Abu in the food or drink thus prepared particularly preferably ranges from 20 to 200 ppm by mass. Accordingly, it is herein preferred that the step for the incorporation of γ-Glu-Abu into a food or drink comprises the step of adjusting the concentration of *γ*-Glu-Abu in the food or drink thus prepared to a level ranging from 20 to 200 ppm by mass.

The food, drink, seasoning or the like, which comprises the incorporated kokumi₋imparting agent used in the present invention or complex kokumi-imparting agent according to the present invention, may further comprise, for instance, any solid or liquid carrier and/or appropriate seasoning ingredients, which are acceptable for foods and drinks.

As the foregoing carriers, there can be listed, for instance, glucose, lactose, saccharose, starch, mannitol, dextrin, fatty acid glycerides, polyethylene glycol, hydroxyethyl starch, ethylene glycol, polyoxyethylene sorbitan fatty acid esters, gelatine, albumin, amino acids, water, and physiological saline.

The aforementioned ingredients for seasoning are not restricted to any particular one and they may be any ones currently used in this field, but specific examples thereof are those already described above.

The contents of the foregoing carriers, other seasoning ingredients or the like are not restricted to specific ones.

The seasoning composition of the present invention comprises *γ*-Glu-Abu in an amount of not less than 1,000 ppm by mass, preferably 2,000 ppm by mass and more preferably 2,500 ppm by mass. These seasonings particularly suitably show the taste-imparting effect of *γ*-Glu-Abu. The rate of *γ*-Glu-Abu occupying the seasoning composition of the present invention is preferably not less than 3,000 ppm by mass, more preferably 5,000 ppm by mass, further preferably not less than 1% by mass, particularly preferably not less than 3% by mass. Further, preferred also include those having a content of *γ*-Glu-Abu of not more than 99.9% by mass. The components of the seasoning composition according to the present invention other than *γ*-Glu-Abu are not restricted to specific ones and specific examples thereof include carriers and seasoning ingredients, which are acceptable for foods and drinks.

More specific examples of the seasonings of the present invention are yeast extracts each containing *γ*-Glu-Abu in an amount of not less than 2,500 ppm by mass. The yeast extract is not particularly restricted in any of the cell bodies of microorganisms, from which the extract is originated, the conditions of cultivating the microorganisms and the methods for the extraction thereof and accordingly, any yeast extract can be used in the seasoning composition of the present invention. Furthermore, these yeast extracts may be ones which have been subjected to, for instance, a heat-treatment, a treatment with an enzyme, a concentration treatment and/or a treatment for converting the same into powder. The method for the preparation of such a yeast extract containing not less than 2,500 ppm by mass of *γ*-Glu-Abu is not limited to any particular one, but such a yeast extract product may be obtained by, for instance, adding *γ*-Glu-Abu to a yeast extract in such a manner that the concentration of the former falls within the range specified above.

The seasoning composition of the present invention may be used in any form and may be in the form of, for instance, a dried powder, a paste and a solution, without any restriction in the physical properties thereof.

The seasoning composition of the present invention can be used for the incorporation thereof into, for instance, foods and drinks.

The present invention further provides a method for the preparation of another type of a seasoning composition, which comprises the step of adding the seasoning of the present invention to other seasoning ingredients or a carrier acceptable for foods and drinks. The concentration of *γ*-Glu-Abu in the seasoning composition prepared according to this method particularly preferably ranges from 400 to 500,000 ppm by mass. In particular, the method for the preparation of this type of a seasoning composition according to the present invention preferably comprises the steps of mixing the seasoning composition of the present invention with other seasoning ingredients and then controlling the concentration of *γ*-Glu-Abu in this type of a seasoning composition thus prepared to a level ranging from 400 to 500,000 ppm by mass.

The present invention further provides a method for the preparation of a food or drink, which comprises the step of incorporating the seasoning composition of the present invention into other ingredients used for preparing a food or drink. The concentration of *γ*-Glu-Abu in the food or drink thus prepared particularly preferably ranges from 20 to 200 ppm by mass. In particular, it is herein preferred that the step for the incorporation of the seasoning composition of the present invention into other ingredients used for preparing a food or drink comprises the step of adjusting the concentration of *γ*-Glu-Abu in the food or drink thus prepared to a level ranging from 20 to 200 ppm by mass.

Also provided is a method for the preparation of, for instance, a food, a drink or a seasoning, which comprises the step of adding, to an intermediate used for the production of, for instance, a food, a drink or a seasoning, *γ*-Glu-Abu in such a manner that the resulting food, drink or seasoning contains *γ*-Glu-Abu in an amount ranging from 1 ppb by mass to 99.9% by mass. In this respect, the food, drink, seasoning or the like is preferably a low salt food.

The present invention also provides a method for the preparation of a food or a drink, which comprises the step of incorporating the seasoning composition of the present invention into an intermediate used for preparing such a food or drink. In this connection, the food or drink is preferably a low salt food.

In the method for preparing a food or drink, or an intermediate used for the preparation of a food or drink, it is also possible to use, for instance, the aforementioned yeast extract containing *γ*-Glu-Abu in a high concentration, as an ingredient used for preparing a food or drink, which comprises not less than 1,000 ppm by mass of *γ*-Glu-Abu and is used for the preparation of another food or drink. Moreover, usable herein as such ingredients likewise include, for instance, *γ*-Glu-Abu products prepared according to a chemical or enzymatic synthetic method and then isolated; or the diluted and/or dispersed product of the resulting *γ*-Glu-Abu products thus isolated. Examples of such diluted and/or dispersed products containing *γ*-Glu-Abu include those obtained by diluting the powdery product of *γ*-Glu-Abu with any solid or liquid carriers acceptable for foods and drinks, which have already been listed above.

In the present invention, the phrase "ingredients used for preparing other foods or drinks" is herein intended to include all kinds of ingredients for foods and drinks currently used as raw materials for foods and drinks except for the "ingredients for foods and drinks containing not less than 1,000 ppm by mass of *γ* -Glu-Abu" and specific examples thereof include those listed below as foods and drinks and intermediates for preparing them, in addition to the aforementioned carriers and ingredients for seasoning, which are acceptable for foods and drinks.

The method for preparing a food or a drink or an intermediate used for preparing the same may comprise the step for further processing or cooking the mixture of ingredients for foods and drinks, which is obtained through the step of incorporating an ingredient for foods and drinks containing not less than 1,000 ppm by mass of *γ*-Glu-Abu into other ingredients for foods and drinks. In this respect, the term "processing or cooking" herein used include any cooking step commonly used in this field. Examples of such cooking steps include roasting, baking or broiling, boiling, frying, steaming, cutting, crushing or smashing, grating, rubbing and grating, mashing, grinding and mashing, mincing, blending, sieving and pounding steps, but the present invention is not restricted to these specific cooking steps.

Examples of the foods and drinks or the intermediates used for preparing them, which can be prepared according to the method disclosed, include those already listed above, i.e., dairy products such as butter and cheese; animal oils and fats-containing and/or vegetable oils and fats-containing foods such as margarine, sauces and roux; emulsified foods such as dressings and mayonnaise; various kinds of curry and stew; various kinds of snack foods; and various kinds of soups containing meat extracts or essences of meat and/or cream. Moreover, such foods and drinks or intermediates used for preparing the same likewise include, for instance, fermented or brewed foods such as miso and soy sauce; soups or broths and sauces which make use of such fermented or brewed foods; processed vegetable foods such as salted vegetables and pickles; meat-processed products such as hams and sausage; processed marine products such as boiled fish paste, dried marine products and foods boiled down in soy; cooked meat balls and hamburger steak; fried foods; and grilled chicken.

The foods and drinks also include foods or drinks as the completed products in such forms that they are currently put on the market and can be eaten and the term "intermediates used for preparing foods and drinks" is herein intended to mean all of those having any form prior to processing the same into the completed products. When using the intermediate used for preparing a food or a drink as a seasoning ingredient containing *γ*-Glu-Abu, it is preferred that the intermediate comprises *γ*-Glu-Abu in an amount ranging from about 400 to 500,000 ppm by mass, and preferably about 4,000 to 40,000 ppm by mass and such an intermediate can be prepared by adding an ingredient for foods and drinks containing, for instance, not less than 1,000 ppm by mass of *γ* -Glu-Abu in such a manner that the resulting intermediate has a concentration thereof falling within the range specified above. Alternatively, the final or completed product preferably comprises about 20 to 200 ppm by mass of *γ* -Glu-Abu as expressed in terms of the concentration at the time of eating the same or that thereof in the food or drink as the final product and such a final product can be prepared by adding an ingredient for foods and drinks containing, for instance, not less than 1,000 ppm by mass of *γ*-Glu-Abu in such a manner that the resulting final product has a concentration thereof falling within the range specified above.

In the method for the preparation of a food or a drink or an intermediate used for preparing the same, the step of adding, to an ingredient for preparing other foods or drinks, the ingredient used for preparing a food or a drink, which comprises *γ*-Glu-Abu, preferably comprises the step of controlling the concentration of *γ*-Glu-Abu in the resulting intermediate to a level of 400 to 500,000 ppm by mass and the method more preferably comprises an additional step of adding the intermediate used for preparing foods or drinks to an ingredient used for preparing other foods and drinks to thus adjust the concentration of *γ*-Glu-Abu in the resulting food or drink to a level ranging from 20 to 200 ppm by mass.

In the method for preparing a food or a, the step for adding an ingredient used for preparing a food or a drink, which comprises *γ*-Glu-Abu, to an ingredient for preparing other foods or drinks preferably comprises the step of controlling the concentration of *γ*-Glu-Abu in the resulting food or drink to a level of 20 to 200 ppm by mass.

The method for preparing a food or a drink is suitable for the cases in which the food or drink is a low salt one. In this case, it is preferred that the method comprises an additional step of adding, to an ingredient for foods or drinks, at least one member selected from the group consisting of organic acids such as lactic acid, citric acid, malic acid and succinic acid, and salts thereof, and preferably lactic acid and malic acid in such a manner that the concentration thereof in the resulting food or drink falls within the range of from 0.005 to 0.1% by mass, and it is likewise preferred that the method further includes the step of adding common salt to the ingredient for foods or drink in an amount smaller than that observed when preparing the corresponding and existing food or drink. In this respect, the term "small amount of common salt in a low salt food" herein used means, for instance, the common salt concentration, in the low salt food, of at least 5% and preferably at least 10% smaller than that observed for the corresponding and existing food or drink.

The food and drink of the present invention may be presented or provided in any form usually used in the field of foods and drinks, for instance, products packaged in containers for retort, canned and bottled forms, or in the form of dried products.

The present invention will hereunder be described in more detail with reference to the following Examples, but the present invention is not restricted to these specific Examples at all.

### Example

### Preparation of Various Samples:

The following four substances were purchased on the market: *γ*-L-Glu-L-Abu (Abu: *α*-aminobutyric acid; available from Bachem Feinchemikalien AG); *γ* -L-Glu-L-Ala (available from Bachem Feinchemikalien AG); *γ*-L-Glu-L-Cys (available from Sigma Aldrich Japan Co., Ltd.); and *γ*-L-Glu-L-Thr (available from KOKUSAN Chemical Co., Ltd).

### Synthesis of L-Glu-L-Val:

(Step 1): There were dissolved, in methylene chloride (100 mL), Z-L-Glu-OBzl (N-*α*-carbobenzoxy-L-glutamic acid *α*-benzyl ester, 7.619 g, 20.51 mM) and Val-OBzl · HCl (L-valine benzyl ester hydrochloride, 5 g, 20.51 mM) and the resulting solution was maintained at 0°C. There were then added, to the solution, triethylamine (3.2 mL, 22.57 mM), HOBt (1-hydroxybenzo-triazole, 3.053 g, 22.57 mM) and WSC · HCl (1-ethyl-3-(3-dimethylaminopropyl) carbodiimide hydrochloride, 4.326 g, 22.57 mM) and the resulting mixture was stirred at room temperature overnight. The reaction liquid was then concentrated under reduced pressure and the resulting residue was dissolved in ethyl acetate (220 mL). The solution was fractionated with a 5% citric acid aqueous solution (100 mL) and the aqueous phase thus obtained was further extracted with ethyl acetate (60 mL). The organic phases were combined and then washed in order with a saturated common salt solution (80 mL), a 5% aqueous solution of sodium hydrogen carbonate (80 mL) and a saturated common salt solution (80 mL). The organic phase thus obtained was dried over anhydrous magnesium sulfate, the latter was then removed through filtration and the filtrate obtained was concentrated under reduced pressure. The residue was washed with ethyl acetate/n-hexane (1:1) mixture while maintaining the former in a slurry state and then it was filtered to give Z-L-Glu-L-Val-OBzl (10.0273 g). Moreover, the crystals precipitated from the ethyl acetate/n-hexane fraction by the addition of n-hexane were collected and then recrystallized from ethyl acetate/n-hexane to thus recover Z-L-Glu-L-Val-OBzl (1.0399 g).
   Yield: 94.25%.
(Step 2) To ethanol (160 mL), there was added Z-L-Glu-L-Val-OBzl (11.71 g, 20.86 mM), subsequently there were added, to the mixture, a 10% palladium on carbon (2.3 g) and then water (10 mL) and the resulting reaction system was stirred at room temperature overnight in a hydrogen gas atmosphere. Water (100 mL) was added to the system in small portions during the reaction. The palladium on carbon was removed through filtration, the resulting filtrate was concentrated under reduced pressure, the residue thus obtained was recrystallized from a small amount of water and ethanol to thus give *γ*-L-Glu-L-Val (5.0 g).
   Yield: 97.23%.

The characteristic properties of the resulting product are as follows:
ESI-MS : m/z 247.2 (M+H)⁺
¹H -NMR(400MHz, D₂O): *δ* (ppm) : 0.86 (3H, d, J = 6.8 Hz), 0.88 (3H, d, J = 6.8 Hz), 2.04-2.13 (3H, m), 2.42-2.46 (2H, m), 3.74 (1H, t, J=6.3 Hz), 4.13 (1H, d, J=5.8Hz) .

### Preparation of γ-L-Glu-L-Ser:

According to the same procedures used in the foregoing preparation of *γ* -L-Glu-L-Val, *γ*-L-Glu-L-Ser was synthesized while using Z-L-Glu-OBzl and L-Ser- OBzl as starting materials. The characteristic properties of the resulting product are as follows:
ESI-MS : m/z 235.1 (M+H)⁺
¹H-NMR (400 MHz, D₂O): *δ* (ppm): 1.98-2.09 (2H, m), 2.40 (2H, t, J=8.0 Hz), 3.71-3.81 (3H, m), 4.33 (1H, t, J=8.0 Hz).

### Preparation of γ-L-Glu-L-t-Leu:

According to the same procedures used in the foregoing preparation of *γ* -L-Glu-L-Val, *γ*-L-Glu-L-t-Leu was synthesized while using Z-L-Glu-OBzl and L-t-Leu- OBzl as starting materials. The characteristic properties of the resulting product are as follows:
ESI-MS : m/z 261.3 (M+H)⁺

### Preparation of γ-L-Glu-Aib:

According to the same procedures used in the foregoing preparation of *γ* -L-Glu-L-Val, *γ*-L-Glu-Aib was synthesized while using Z-L-Glu-OBzl and Aib-Ot- Bu as starting materials. The characteristic properties of the resulting product are as follows:
ESI-MS : m/z 233.3 (M+H)⁺
¹H-NMR (400 MHz, D₂O): *δ* (ppm): 1.36 (6H, s), 2.00-2.06 (2H, m), 2.30-2.34 (2H, m), 3.69 (1H, t, J=6.2 Hz).

### (Test Example 1): Preparation of CaSR-Expression Plasmid

A CaSR-expression plasmid was prepared according to the following procedures:
There were synthesized synthetic oligo DNA used for the PCR procedures (i.e., forward primer (Sequence No. 3: ACTAATACGACTCACTATAGGGACCATGGCA- TTTTATAGCTGCTGCTGG) and reverse primer (Sequence No. 4: TTATGAATT- CACTACGTTTTCTGTAACAG) on the basis of the DNA sequence registered at NCBI (CaSR (calcium receptor): NM_000388, Sequence Nos. 1 and 2).

The PCR procedures were carried out under the conditions specified below using cDNA (available from Clontech Company) derived from human kidney as a material, while using the foregoing primers and Pfu Ultra DNA Polymerase (available from Stratagene Company): The reaction system was processed at 94°C for 3 minutes and then at 94°C for 30 seconds, at 55°C for 30 seconds and at 72°C for 2 minutes, wherein these steps were repeated over 35 times and the system was finally reacted at 72°C for 7 minutes. The reaction system was then subjected to electrophoresis treatment through agarose as a support, the agarose was stained with a DNA-staining agent and then it was irradiated with UV light rays to detect whether the cDNA was surely amplified by the PCR procedures or not. At the same time, the electrophoresis pattern was compared with the DNA marker whose electrophoretic size had been known to thus confirm the chain lengths of the PCR products.

Plasmid vector pBR322 was cleaved with a restriction enzyme EcoRV (available from Takara Co., Ltd) and the gene fragment amplified by the PCR procedures was ligated with the plasmid vector at the cleaved site, using Ligation Kit (available from Promega Company). The cells of Escherichia coli DH5 *α* strain were transformed with this reaction solution, followed by the selection of the transformants containing the plasmid in which the PCR-amplified product had been cloned and further the PCR-amplified product was confirmed by the DNA-base sequence analysis.

This recombinant plasmid was used for the establishment of a human CaSR-expression plasmid hCaSR/pcDNA3.1.

### (Test Example 2): Evaluation of CaSR Agonist Activity

293E Cells (EBNA1-expresion HEK293 cells, ATCC No. CRL-10852) were cultivated in DMEN/Ham's-F12 (3.15/mL glucose-containing Dulbecco's modified Eagle medium, available from Nakaraitesk Company) supplemented with 10% fetal calf serum, in the presence of 200 *µ* g/mL of G418 (available from Genetisin). The cultured cells were inoculated in F25 flask at a density of 3x10⁶ cells/10 mL, the flask was allowed to stand over 24 hours in a CO₂ incubator (5% CO₂, 37°C), and then the human CaSR-expression plasmid hCaSR/pcDNA3.1 was transformed or transfected with a reagent for transfection Fugene6 (available from Roche Company). The transfected plasmid was maintained in a CO₂ incubator over 6 to 7 hours, then the cells were recovered using a 10% fetal calf serum-containing DMEM/ Ham's-F12 and the cells were inoculated in each well of a poly-D-lysine coat 96-well plate (BD-Biocoat) at a density of 70,000 cells/well.

The 96-well plate was allowed to stand over 24 hours in a CO₂ incubator, then the culture medium was removed from each well of the 96-well plate in which the cells were inoculated, followed by the addition, to each well, of a Ca²⁺ fluorescent indicator Calcium 4 Assay Kit (available from Molecular Devices Company) dissolved in Assay Buffer (containing 146 mM of NaCl, 5 mM of KCl, 1 mM of MgSO₄, 1 mg/mL of glucose, 20 mM of HEPES (pH 7.2) and 0.75 to 1.25 mM of CaCl₂) in an amount of 200 *µ* l/well, and subsequently allowing the 96-well plate to stand at 37°C for one hour and then at room temperature for 10 minutes so that the indicator was incorporated into the cells.

To each well of the 96-well plate, there was added each test compound dissolved in a 0.1% BSA-containing Assay Buffer in an amount of 50 *µ* l/well and then any change of the intensity of fluorescence was monitored over 3 minutes using FLEX Station (available from Molecular Devices Company).

### (Method for the Determination of EC₅₀):

The difference (RFU (Max-Min)) between the maximum and minimum fluorescent intensities observed for each well before and after the addition of each specific test compound was determined by the automatic calculation using FLEX Station. The activity rate was calculated while the RFU (Max-Min) value observed when adding the compound at the maximum concentration was defined to be 100% and the RFU (Max-Min) value observed when using the 0.1% BSA-containing Assay Buffer free of any test compound was defined to be 0%, followed by subjecting the resulting data to the curve-fitting procedures using the spreadsheet software Xfit or Graph-Pad-Prism to thus determine the EC₅₀ which was the concentration of the compound at the activity rate of 50%. The results thus obtained are summarized in the following Table 1.

**[Table 1]**

| **Compound** | **EC₅₀, *µ* M** |
|---|---|
| *γ*-Glu-Abu | 0.21 |
| *γ*-Glu-Ala | 1.24 |
| *γ*-Glu-Val | 1.03 |
| *γ*-Glu-tLeu | 3.06 |
| *γ*-Glu-Cys | 0.16 |
| *γ*-Glu-Ser | 11 |
| *γ*-Glu-Thr | 6.97 |
| *γ*-Glu-Aib | 15.4 |

When comparing with other dipeptides, *γ*-Glu-Abu was found to have a strong CaSR agonist activity comparable to that observed for *γ*-Glu-Cys. It has been known that a low molecular weight peptide possessing a CaSR agonist activity is useful as a kokumi-imparting agent (see Patent Document 1 specified above) and accordingly, it is suggested that *γ*-Glu-Abu would be able to serve as a particularly excellent kokumi-imparting agent.

### Example 1: Evaluation of Kokumi-Imparting Activity

In this example, *γ*-Glu-Abu was inspected for the intensity of its kokumi-imparting activity according to a quantitative sensory evaluation test.

This quantitative sensory evaluation test was carried out according to the following procedures: The intensity of the kokumi-imparting activity observed for each test compound was determined as a value observed when blending 0.001 to 0.5 g/dL of the corresponding test compound to the distilled water containing sodium glutamate (0.05 g/dL), inosine monophosphate (0.05 g/dL), and sodium chloride (0.5 g/dL). In this connection, when a sample showed an acidic nature upon the dissolution of the test compound as compared with the test compound-free control, the pH value of the sample was adjusted, using NaOH, to a level of the pH value (observed for the control) ±0.2 prior to the practical use of the sample in the evaluation. The evaluation criteria are assumed to be as follows: control: 0 point; strong: 3 points; very strong: 5 points, while the test was carried out using a panel of n (the number of panelists) = 4. Moreover, to make more clear the criteria, the initial taste and the middle/after taste of *γ*-Glu-Val-Gly at a concentration of 0.001 g/dL were set at 3.0 points, respectively. In this respect, the term "middle/after taste" means the taste detected during the combined period of time extending from the middle taste-sensing period and the after taste-sensing period. The scoring or rating was carried out using the method of line scale and more specifically, it was carried out by writing each corresponding score on a straight line on which points corresponding to -5 ~ 0 ~ 5 had been indicated. The panelists used in this test were defined to be persons who had been engaged in the development of seasonings for foods over not less than one year of the cumulative time period and who could judge that the difference in the titer between *γ* -Glu-Cys-Gly and *γ*-Glu-Val-Gly added to a solution having umami/salty taste is about 10 times (while confirming the ability of these persons at regular intervals). γ-Glu-Abu wisely showed the kokumi-imparting activity over the foregoing range of concentration thereof added. The results thus observed for typical concentrations thereof are summarized in the following Table 2.

In addition, *γ*-Glu-Ala was likewise inspected for its kokumi-imparting effect according to the same procedures used above and the results are also listed in Table 2. The both of these kokumi-imparting agents are initial taste type ones which show high scores for the initial taste, but *γ*-Glu-Abu was found to be a dipeptide possessing an extremely high titer among others.

**[Table 2]**

| **Comp.** | **Conc. (g/dL)** | **Strength of Kokumi Impartment** | | **Sensory Evaluation Profile** |
|---|---|---|---|---|
| | | **Initial Taste** | **Middle/ After Taste** | |
| *γ*-Glu-Abu | 0.005 | 3.8 | 3.2 | Thickness was enhanced from the initial taste stage (giving an impression harmonized with the entire taste) |
| *γ*-Glu-Ala | 0.2 | 4.5 | 4.3 | Principally, the sour and sweet tastes are enhanced starting from the initial taste stage. |

Alternatively, *γ*-Glu-Cys and other dipeptides were also inspected for the intensity of the kokumi-imparting activity according to the same quantitative sensory evaluation tests as that used above. The results thus obtained are summarized in the following Table 3.

**[Table 3]**

| **Comp.** | **Conc. (g/dL)** | **Strength of Kokumi Impartment** | | **Sensory Evaluation Profile** |
|---|---|---|---|---|
| | | **Initial Taste** | **Middle/ After Taste** | |
| *γ*-Glu-Cys | 0.01 | 3.1 | 3.1 | This mainly shows middle and after tastes and emits a slight sulfurous odor. |
| *γ*-Glu-Ser | 0.2 | 3.6 | 3.0 | This shows a strong initial taste, but emits some foreign tastes. |
| *γ*-Glu-Val | 0.01 | 3.1 | 2.4 | This shows a quite weak after taste. |

Thus, it was found that *γ*-Glu-Abu possesses an excellent kokumi-imparting activity and that it is also excellent in the rising of the initial taste with respect to the taste-developing or seasoning pattern. This excellent rising of the initial taste observed for *γ*-Glu-Abu is one of extremely advantageous points thereof as compared with that observed for *γ*-Glu-Cys. Moreover, *γ*-Glu-Abu is also excellent in its stability and this is also an advantageous point as compared with *γ*-Glu-Cys. In addition, *γ*-Glu-Abu has a short chain length since it comprises only two amino acid residues. Accordingly, it can relatively easily be prepared at a low cost as compared with the preparation of any tripeptide comprising 3 amino acid residues and accordingly, γ-Glu-Abu is likewise quite advantageous from the industrial standpoint.

### Example 2: Determination of Intensity of Kokumi-Imparting Activity:

The intensity of *γ*-Glu-Abu was examined using a testing method for the determination of Point of Subjective Equality (PSE) according to the limit-determining technique ("Statistical Sensory Examination techniques", written by SATO Shin, published by Japan Federation of Science and Technology).

In this Example, the sensory evaluation was carried out as follows: There was used, as the solution for the sensory evaluation, distilled water containing sodium glutamate (0.05 g/dL), inosine monophosphate (0.05 g/dL) and sodium chloride (0.5 g/dL). As an existing dipeptide possessing a kokumi-imparting effect, there was used *γ*-Glu-Val. The same level of such an effect can also be observed for *γ*-Glu-Cys and *γ*-Glu-Val, but they do not show any particularly intensive initial taste and show the quality of taste different from that of *γ*-Glu- Abu. *γ* -Glu-Ala shows the intensity of the kokumi-imparting effect weaker than that of *γ*-Glu-Val, has a strong sour taste and it is hard to handle since it requires the control of the pH value thereof. Similarly, *γ*-Glu-Ser shows the intensity of the kokumi-imparting effect weaker than that of *γ*-Glu-Val, it likewise emits foreign tastes and accordingly, it is hard to handle the same.

To determine the concentration of *γ*-Glu-Val showing the taste-developing or seasoning effect whose intensity is identical to that of the foregoing solution used for the sensory evaluation test, to which 0.005 g/dL of *γ*-Glu-Abu was added, there were prepared solutions of *γ*-Glu-Val whose concentration was varied on a 50% logarithmic scale while using, as standard, the solution used for the sensory evaluation test, to which 0.01 g/dL of *γ*-Glu-Val was added. The concentration of *γ*-Glu-Val was changed at 7 stages within the range of from 0.0030 to 0.0337 g/dL. When a sample showed an acidic nature after each test compound was dissolved in the solution for the sensory test, as compared with the pH value of the control free of any test compound, the pH value of the sample was adjusted, using NaOH, to a level of the pH value (observed for the control) ±0.2, prior to the practical use of the sample in the evaluation. There were presented to eighteen panelists, these solutions in the ascending order of the *γ*-Glu-Val concentration and the evaluation tests were continued till each panelist judged that the test solution having a specific concentration showed the kokumi-imparting effect stronger than that observed for the solution containing 0.005 g/dL of *γ*-Glu-Abu. After putting a certain pause, there were now presented, to the same eighteen panelists, the foregoing solutions in the descending order of the *γ*-Glu-Val concentration and the evaluation tests were continued till each panelist judged that the test solution having a specific concentration showed the kokumi-imparting effect weaker than that observed for the solution containing 0.005 g/dL of *γ*-Glu-Abu.

In this sensory evaluation tests, persons who had sufficiently been experienced in the development of food products were used as the panelists. The results thus obtained in these evaluation tests are summarized in the following Table 4.

**[Table 4]: Number of Panelists used for Each γ-Glu-Val Concentration Examined:**

| Change in Stimn. | No. of Panelists who judged that the effect of *γ*-Glu-Val is higher than that observed for *γ* -Glu-Abu (0.0050 g/dL) (No. of panelists) | No. of Panelists who judged that the diff. in the effect between *γ*-Glu-Val and of *γ*-Glu-Abu (0.0050 g/dL) is uncertain (No. of panelists) | No. of Panelists who judged that the effect of *γ*-Glu-Val is weaker than that observed for *γ*-Glu-Abu (0.0050 g/dL) (No. of panelists) |
|---|---|---|---|
| Conc. of *γ* -Glu-Val (g/dL) | | | |
| 0.0030 | 0 | 0 | 36 |
| 0.0044 | 1 | 0 | 35 |
| 0.0067 | 3 | 13 | 20 |
| 0.0100 | 11 | 13 | 12 |
| 0.0150 | 25 | 6 | 5 |
| 0.0225 | 28 | 7 | 1 |
| 0.0337 | 36 | 0 | 0 |

[Table 5]: Lower threshold and upper threshold at which each panelist judged that the samples compared to one another had concentrations identical to each other

| **Panelist No.** | **Method of Presentation*** | **Lower Threshold (ppm)** | **Upper Threshold (ppm)** |
|---|---|---|---|
| 1 | ↑ | 55.5 | 55.5 |
| 2 | ↑ | 83.5 | 83.5 |
| 3 | ↑ | 55.5 | 125.0 |
| 4 | ↑ | 55.5 | 125.0 |
| 5 | ↑ | 55.5 | 125.0 |
| 6 | ↑ | 125.0 | 187.5 |
| 7 | ↑ | 37.0 | 37.0 |
| 8 | ↑ | 55.5 | 125.0 |
| 9 | ↑ | 55.5 | 125.0 |
| 10 | ↑ | 125.0 | 281.0 |
| 11 | ↑ | 55.5 | 55.5 |
| 12 | ↑ | 55.5 | 83.5 |
| 13 | ↑ | 83.5 | 125.0 |
| 14 | ↑ | 83.5 | 83.5 |
| 15 | ↑ | 125.0 | 125.0 |
| 16 | ↑ | 187.5 | 281.0 |
| 17 | ↑ | 55.5 | 281.0 |
| 18 | ↑ | 83.5 | 83.5 |
| 19 | ↓ | 125.0 | 125.0 |
| 20 | ↓ | 83.5 | 125.0 |
| 21 | ↓ | 187.5 | 281.0 |
| 22 | ↓ | 83.5 | 187.5 |
| 23 | ↓ | 83.5 | 83.5 |
| 24 | ↓ | 55.5 | 83.5 |
| 25 | ↓ | 83.5 | 125.0 |
| 26 | ↓ | 55.5 | 281.0 |
| 27 | ↓ | 55.5 | 125.0 |
| 28 | ↓ | 187.5 | 281.0 |
| 29 | ↓ | 187.5 | 187.5 |
| 30 | ↓ | 55.5 | 125.0 |
| 31 | ↓ | 125.0 | 125.0 |
| 32 | ↓ | 83.5 | 125.0 |
| 33 | ↓ | 56.0 | 83.5 |
| 34 | ↓ | 281.0 | 281.0 |
| 35 | ↓ | 55.5 | 83.5 |
| 36 | ↓ | 125.0 | 281.0 |
| Confidence Region (average) | -- | 94.5 | 149.3 |
| PSE | 121.9 | | |

| | | | |
|---|---|---|---|
| *: Regarding the method of presentation, ↑ means the ascending order of the concentration, and ↓ means the descending order of the concentration. | | | |

1) The cases, in which the lower and upper threshold values are identical to one another, correspond to the cases in which it was judged that the difference between the judgments of "stronger" and "weaker" was not determinable or in which any concentration of *γ*-Glu-Val was not clearly specified. For instance, the panelist No. 1 judged that the intended effect of *γ*-Glu-Val was weaker than that observed for *γ*-Glu-Abu at the *γ*-Glu-Val concentration of 44 ppm (0.0044 g/dL), while he judged that the effect was stronger than that observed for *γ*-Glu-Abu at the *γ* -Glu-Val concentration of 67 ppm (0.0067 g/dL) and accordingly, the lower threshold value (55.5 ppm) and the upper threshold value (55.5 ppm) are identical to one another.
2) The "confidence region (or value)" is herein defined to be the average of the lower threshold value and the upper threshold value.

The point of subjective equality (PSE) of *γ*-Glu-Val relative to the 50 ppm (0.0050 g/dL) of *γ*-Glu-Abu is defined to be as follows: (Sum of the confidence value of the lower threshold value and that of the upper threshold value)÷2.

The concentration of *γ*-Glu-Val (PSE) showing the desired effect whose intensity is identical to that observed for 0.0050 g/dL of *γ*-Glu-Abu would be assumed to be about 0.0100 g/dL while taking the number of panelists shown in Table 4 into account. If PSE is calculated on the basis of the upper and lower threshold values of *γ*-Glu-Val, at which each individual panelist judges that the effects observed for these two dipeptides are equivalent to each other, it is found to be 0.0122 g/dL. In this connection, the intensity of the desired kokumi-imparting effect of *γ*-Glu-Abu was found to be about 2.4 times that observed for *γ*-Glu-Val and accordingly, it could be so concluded that the former is a dipeptide having extremely high intensity of the effect. Thus, γ -Glu-Abu can be said to be a valuable dipeptide which can easily be prepared as compared with the conventionally known substances and which can show the kokumi even at the initial taste stage when applied to a wide variety of foods.

### Example 3: Evaluation of Effect of γ-Glu-Abu on Enhancement of Salty Taste

In this Example, *γ*-Glu-Abu was inspected for its salty taste-enhancing effect according to the quantitative sensory evaluation tests.

The sensory evaluation tests were carried out according to the following method: A test compound in an amount, which was considered to be optimum, was added to distilled water containing sodium chloride (0.5 g/dL) and the intensity of the salty taste-enhancing effect thereof was determined. When a sample showed an acidic nature after each test compound was dissolved in the solution for the sensory test, as compared with the pH value of the control free of any test compound, the pH value of the sample was adjusted, using NaOH, to a level of the pH value (observed for the control) ±0.2, prior to the practical use of the sample in the evaluation.

Regarding the score of the sensory evaluation, the effect was evaluated within the range extending from -5 to 0 to 5, on the assumption that the control free of any compound or the aqueous solution of sodium chloride having a concentration of 0.5 g/dL was evaluated to have a score of 0 and that the aqueous solution of sodium chloride having a concentration of 0.75 g/dL was evaluated to have a score of 5, while the number of panelists (n) constituting each panel was set at 5. The term "initial taste" herein means the taste impression detected by each panelist during the term extending from the time of eating the sample to 2 seconds thereafter, while the term "middle/after taste" means that detected by each panelist during the term from 2 seconds on, after eating the same, or during the term combining the middle taste-sensing period and the after taste-sensing period. The scoring or rating was carried out using the linear standard technique and more specifically, it was carried out by writing each corresponding score on a straight line on which points corresponding to -5 ∼ 0 ∼ 5 had been indicated. The panelists used in this test were defined to be persons who had been engaged in the development of seasonings for foods over not less than one year of the cumulative time period and who could judge that the difference in the titer between *γ* -Glu-Cys-Gly and *γ*-Glu-Val-Gly is about 10 times (while confirming the ability of these persons at regular intervals). The results thus obtained are summarized in the following Table 6.

**[Table 6]**

| **Comp.** | **Conc. (g/dL)** | **Strength of Salty Taste Impartment** | | **Sensory Evaluation Profile** |
|---|---|---|---|---|
| | | **Initial Taste** | **Middle/ After Taste** | |
| *γ*-Glu-Abu | 0.004 | 1.6 | 1.5 | The salty taste was enhanced even from the initial taste period and sharpness of salty taste was also imparted. |
| *γ*-Glu-Val-Gly | 0.002 | 0.8 | 1.8 | The sample loses the characteristics as an initial taste type one. |

In this Example, *γ*-Glu-Val-Gly as a tripeptide having a high titer with respect to the kokumi-imparting ability was compared with *γ*-Glu-Abu as a dipeptide according to the present invention. As a result, it would be concluded that *γ*-Glu-Val-Gly shows an intensity of taste-imparting activity higher than that observed for *γ*-Glu-Abu, while taking into consideration the concentration used for the evaluation and the resulting scores. As also shown in the sensory evaluation profile, however, the balance of the salty taste is considerably lowered in case of *γ*-Glu-Val-Gly. On the other hand, *γ*-Glu-Abu can enhance the salty taste in a considerably well-balanced manner and accordingly, *γ*-Glu-Abu may particularly be suitable as a salty taste-enhancing peptide.

### Example 4: Evaluation of Effect of Organic Acid Used in Combination:

In this Example, the effect of the use of an organic acid in combination on the salty taste-enhancing effect of *γ*-Glu-Abu was investigated according to the quantitative sensory evaluation test.

The sensory evaluation tests were carried out according to the following procedures. Low salt "Whole Chicken Stock" commercially available from Ajinomoto Co., Ltd. was dissolved in hot water so that the resulting solution had a common salt concentration of 0.48 g/dL, then an appropriate amount of each test compound was dissolved in the solution and the intensity of the salty taste was determined. The pH value of the sample solution obtained after dissolving each test compound was not different from that of the control free of any added compound and accordingly, any control of the pH value was not required. In the sensory evaluation, there was not recognized any influence of, for instance, the sour taste. Regarding the score of the sensory evaluation, to make more clear the criteria for the evaluation, the evaluation criteria for the salty taste are assumed to be as follows: the control: 3 points; the salty taste observed for a soup prepared by increasing the salt concentration to 1.25 times that of the control: 4 points; and the salty taste observed for a soup prepared by increasing the salt concentration to 1.5 times that of the control: 5 points, while the test was carried out using a panel of n (the number of panelists) = 6. The scoring or rating was carried out using the linear standard technique and more specifically, it was carried out by writing each corresponding score on a straight line on which points corresponding to 1 ∼ 3 ∼ 5 had been specified. The panelists used in this test were defined to be persons who had been engaged in the development of seasonings for foods over not less than one year of the cumulative time period and who could judge that the difference in the titer between *γ*-Glu-Cys-Gly and *γ*-Glu-Val-Gly is about 10 times (while confirming the ability of these persons at regular intervals). The results thus obtained are summarized in the following Table 7.

**[Table 7]**

| **Compound** | | **Conc. (g/dL)** | **Str. of Salty Taste (score)** | **Sensory Evaluation Profile** |
|---|---|---|---|---|
| *γ*-Glu-Abu | | 0.0040 | 3.56 | The salty taste as the initial taste was enhanced. |
| Combined Use 1 | *γ*-Glu-Abu | 0.0040 | 3.92 | The salty taste impression as the initial taste was enhanced and the overall thickness of the soup was improved. |
| | Lactic acid | 0.0300 | | |
| Combined Use 2 | *γ*-Glu-Abu | 0.0040 | 3.76 | The salty taste observed during the term extending from the initial taste stage to the after taste stage was enhanced and the overall thickness of the soup was improved. |
| | Malic acid | 0.0300 | | |

It was thus found that lactic acid and malic acid as organic acids were quite congenial to *γ*-Glu-Abu and that the salty taste-enhancing effect of *γ*-Glu-Abu was further improved by the use of lactic acid and malic acid, as organic acids, in combination with the former.

In other words, such an effect of *γ*-Glu-Abu that the salty taste is enhanced in a well-balanced manner can further be improved by the use of an organic acid in combination with the dipeptide. Accordingly, *γ*-Glu-Abu can be prepared from cheap and currently and widely used materials and is a compound which can further improve the taste-imparting effects of the conventionally known substances.

## Claims

1. The use of a composition comprising L-γ-glutamyl-L-2-aminobutyric acid (γ-Glu-Abu) as a kokumi-imparting agent.

2. A complex kokumi-imparting agent comprising, in combination,
(a) γ-Glu-Abu; and
(b) one or at least two amino acids or peptides selected from the group consisting of γ-Glu-X-Gly wherein X represents an amino acid or an amino acid derivative, γ-Glu-Val-Y wherein Y represents an amino acid or an amino acid derivative, γ-Glu-Ala, γ-Glu-Gly, γ-Glu-Cys, γ-Glu-Met, γ-Glu-Thr, γ-Glu-Val, γ-Glu- Orn, Asp-Gly, Cys-Gly, Cys-Met, Glu-Cys, Gly-Cys, Leu- Asp, D-Cys, γ-Glu-Met (O), γ-Glu- γ-Glu-Val, γ-Glu-Val-NH₂, γ -Glu-Val-ol, γ-Glu-Ser, γ-Glu-Tau, γ-Glu-Cys (S-Me) (O), γ-Glu-Leu, γ-Glu-Ile, γ-Glu-t-Leu and γ-Glu-Cys (S-Me).

3. The use according to claim 1, wherein the composition is a seasoning composition comprising not less than 1,000 ppm by mass of γ-Glu-Abu.

4. The use according to claim 3, wherein the seasoning composition comprises not less than 2,500 ppm by mass of γ-Glu-Abu.

5. A food, a drink or an intermediate used for preparing a food or drink comprising, upon the total mass of the food, the drink or the intermediate for foods or drinks, 20 to 200 ppm by mass of γ-Glu-Abu; 0.005 to 0.1% by mass of at least one organic acid or a salt thereof selected from the group consisting of lactic acid, citric acid, malic acid and succinic acid; and 0.01 to 0.5% by mass of common salt, as well as a carrier acceptable for foods and drinks and/or one or at least two seasoning ingredients.

6. A method for enhancing the taste of a food or a drink comprising the step of incorporating, into a food or a drink, a composition which comprises not less than 400 ppm by mass of γ-Glu-Abu.

7. The method as set forth in claim 6, wherein the taste-enhancement is imparting kokumi to the food or drink.

## Patentansprüche

1. Verwendung einer Zusammensetzung, die L-γ-Glutamyl-L-2-aminobuttersäure(γ-Glu-Abu) als Kokumi-verleihendes Mittel enthält.

2. Komplexes Kokumi-verleihendes Mittel, das
(a) γ-Glu-Abu und
(b) eine oder mindestens zwei Aminosäuren oder Peptide in Kombination enthält, die aus der Gruppe ausgewählt sind, die aus γ-Glu-X-Gly, worin X eine Aminosäure oder ein Aminosäurederivat darstellt, γ-Glu-Val-Y, worin Y eine Aminosäure oder ein Aminosäurederivat darstellt, γ-Glu-Ala, γ-Glu-Gly, γ-Glu-Cys, γ-Glu-Met, γ-Glu-Thr, γ-Glu-Val, γ-Glu-Orn, Asp-Gly, Cys-Gly, Cys-Met, Glu-Cys, Gly-Cys, Leu-Asp, D-Cys, γ-Glu-Met(O), γ-Glu-γ-Glu-Val, γ-Glu-Val-NH₂, γ-Glu-Val-ol, γ-Glu-Ser, γ-Glu-Tau, γ-Glu-Cys(S-Me)(O), γ-Glu-Leu, γ-Glu-Ile, γ-Glu-t-Leu und γ-Glu-Cys(S-Me) besteht.

3. Verwendung nach Anspruch 1, wobei die Zusammensetzung eine Würzmittelzusammensetzung ist, die nicht weniger als 1000 Massen-ppm γ-Glu-Abu enthält.

4. Verwendung nach Anspruch 3, wobei die Würzmittelzusammensetzung nicht weniger als 2500 Massen-ppm γ-Glu-Abu enthält.

5. Nahrungsmittel, Getränk oder ein Zwischenprodukt, das für die Herstellung eines Nahrungsmittels oder Getränks verwendet wird, welches bezogen auf die Gesamtmasse des Nahrungsmittels, des Getränks oder des Zwischenprodukts für Nahrungsmittel oder Getränke 20 bis 200 Massen-ppm γ-Glu-Abu; 0,005 bis 0,1 Massen-% mindestens einer organischen Säure oder eines Salzes davon, ausgewählt aus der Gruppe, die aus Milchsäure, Zitronensäure, Äpfelsäure und Bernsteinsäure besteht; und 0,01 bis 0,5 Massen-% eines üblichen Salzes, sowie einen Träger, der für Nahrungsmittel und Getränkte geeignet ist, und/oder einen oder mindestens zwei Würzmittelbestandteile enthält.

6. Verfahren zum Verbessern des Geschmacks eines Nahrungsmittels oder Getränks, welches die Stufe umfasst, in der eine Zusammensetzung, die nicht weniger als 400 Massen-ppm γ-Glu-Abu enthält, in ein Nahrungsmittel oder Getränkt gegeben wird.

7. Verfahren nach Anspruch 6, wobei die Geschmacksverbesserung darin besteht, dass Kokumi auf das Nahrungsmittel oder Getränk übertragen wird.

## Revendications

1. Utilisation d'une composition comprenant γ-Glu-Abu (acide L-γ-glutamyl-L-2-aminobutyrique) en tant qu'agent conférant une saveur kokumi.

2. Agent complexe conférant une saveur kokumi comprenant, en association,
(a) γ-Glu-Abu ; et
(b) un ou au moins deux acides aminés ou peptides choisis dans le groupe constitué de γ-Glu-X-Gly dans lequel X représente un acide aminé ou un dérivé d'acide aminé, γ-Glu-Val-Y dans lequel Y représente un acide aminé ou un dérivé d'acide aminé, γ-Glu-Ala, γ-Glu-Gly, γ-Glu-Cys, γ-Glu-Met, γ-Glu-Thr, γ-Glu-Val, γ-Glu-Orn, Asp-Gly, Cys-Gly, Cys-Met, Glu-Cys, Gly-Cys, Leu-Asp, D-Cys, γ-Glu-Met (O), γ-Glu-γ-Glu-Val, γ-Glu-Val-NH₂, γ-Glu-Val-ol, γ-Glu-Ser, γ-Glu-Tau, γ-Glu-Cys (S-Me) (O), γ-Glu-Leu, γ-Glu-Ile, γ-Glu-t-Leu et γ-Glu-Cys (S-Me).

3. Utilisation selon la revendication 1, dans laquelle la composition est une composition d'assaisonnement ne comprenant pas moins de 1 000 ppm en masse de γ-Glu-Abu.

4. Utilisation selon la revendication 3, dans laquelle la composition d'assaisonnement ne comprend pas moins de 2 500 ppm en masse de γ-Glu-Abu.

5. Aliment, boisson ou intermédiaire utilisé pour préparer un aliment ou une boisson comprenant, par rapport à la masse totale de l'aliment, de la boisson ou de l'intermédiaire pour aliments ou boissons, de 20 à 200 ppm en masse de γ-Glu-Abu ; de 0,005 à 0,1 % en masse d'au moins un acide organique ou d'un sel de celui-ci choisi dans le groupe constitué de l'acide lactique, de l'acide citrique, de l'acide malique et de l'acide succinique ; et de 0,01 à 0,5 % en masse de sel ordinaire, ainsi qu'un support acceptable pour les aliments et les boissons et/ou un ou au moins deux ingrédients d'assaisonnement.

6. Procédé d'amélioration du goût d'un aliment ou d'une boisson comprenant l'étape d'incorporation, dans un aliment ou une boisson, d'une composition qui ne comprend pas moins de 400 ppm en masse de γ-Glu-Abu.

7. Procédé selon la revendication 6, dans lequel l'amélioration du goût confère une saveur kokumi à l'aliment ou à la boisson.


### SEQUENCE LISTING

<110> Ajinomoto Co., Inc.
<120> CaSR agonist
<130> EPA-65169
<160> 4
<170> PatentIn version 3.1
<210> 1
   <211> 4924
   <212> DNA
   <213> Homo sapiens
<220>
   <221> CDS
   <222> (373) .. (3609)
   <223>
<400> 1
   caacaggcac ctggctgcag ccaggaagga ccgcacgccc tttcgcgcag gagagtggaa     60
   ggagggagct gtttgccagc accgaggtct tgcggcacag gcaacgcttg acctgagtct    120
   tgcagaatga aaggcatcac aggaggcctc tgcatgatgt ggcttccaaa gactcaagga    180
   ccacccacat tacaagtctg gattgaggaa ggcagaaatg gagattcaaa caccacgtct    240
   tctattattt tattaatcaa tctgtagaca tgtgtcccca ctgcagggag tgaactgctc    300
   caagggagaa acttctggga gcctccaaac tcctagctgt ctcatccctt gccctggaga    360
   gacggcagaa cc atg gca ttt tat agc tgc tgc tgg gtc ctc ttg gca ctc    411
                 Met Ala Phe Tyr Ser Cys Cys Trp Val Leu Leu Ala Leu
                 1               5                   10
   acc tgg cac acc tct gcc tac ggg cca gac cag cga gcc caa aag aag      459
   Thr Trp His Thr Ser Ala Tyr Gly Pro Asp Gln Arg Ala Gln Lys Lys
       15                  20                  25
   ggg gac att atc ctt ggg ggg ctc ttt cct att cat ttt gga gta gca      507
   Gly Asp Ile Ile Leu Gly Gly Leu Phe Pro Ile His Phe Gly Val Ala
   30                  35                  40                  45
   gct aaa gat caa gat ctc aaa tca agg ccg gag tct gtg gaa tgt atc      555
   Ala Lys Asp Gln Asp Leu Lys Ser Arg Pro Glu Ser Val Glu Cys Ile
                   50                  55                  60
   agg tat aat ttc cgt ggg ttt cgc tgg tta cag gct atg ata ttt gcc      603
   Arg Tyr Asn Phe Arg Gly Phe Arg Trp Leu Gln Ala Met Ile Phe Ala
               65                  70                  75
   ata gag gag ata aac agc agc cca gcc ctt ctt ccc aac ttg acg ctg      651
   Ile Glu Glu Ile Asn Ser Ser Pro Ala Leu Leu Pro Asn Leu Thr Leu
           80                  85                  90
   gga tac agg ata ttt gac act tgc aac acc gtt tct aag gcc ttg gaa      699
   Gly Tyr Arg Ile Phe Asp Thr Cys Asn Thr Val Ser Lys Ala Leu Glu
       95                  100                 105
   gcc acc ctg agt ttt gtt gct caa aac aaa att gat tct ttg aac ctt      747
   Ala Thr Leu Ser Phe Val Ala Gln Asn Lys Ile Asp Ser Leu Asn Leu
   110                 115                 120                 125
   gat gag ttc tgc aac tgc tca gag cac att ccc tct acg att gct gtg      795
   Asp Glu Phe Cys Asn Cys Ser Glu His Ile Pro Ser Thr Ile Ala Val
                   130                 135                 140
   gtg gga gca act ggc tca ggc gtc tcc acg gca gtg gca aat ctg ctg      843
   Val Gly Ala Thr Gly Ser Gly Val Ser Thr Ala Val Ala Asn Leu Leu
               145                 150                 155
   ggg ctc ttc tac att ccc cag gtc agt tat gcc tcc tcc agc aga ctc      891
   Gly Leu Phe Tyr Ile Pro Gln Val Ser Tyr Ala Ser Ser Ser Arg Leu
           160                 165                 170
   ctc agc aac aag aat caa ttc aag tct ttc ctc cga acc atc ccc aat      939
   Leu Ser Asn Lys Asn Gln Phe Lys Ser Phe Leu Arg Thr Ile Pro Asn
       175                 180                 185
   gat gag cac cag gcc act gcc atg gca gac atc atc gag tat ttc cgc      987
   Asp Glu His Gln Ala Thr Ala Met Ala Asp Ile Ile Glu Tyr Phe Arg
   190                 195                 200                 205
   tgg aac tgg gtg ggc aca att gca gct gat gac gac tat ggg cgg ccg     1035
   Trp Asn Trp Val Gly Thr Ile Ala Ala Asp Asp Asp Tyr Gly Arg Pro
                   210                 215                 220
   ggg att gag aaa ttc cga gag gaa gct gag gaa agg gat atc tgc atc     1083
   Gly Ile Glu Lys Phe Arg Glu Glu Ala Glu Glu Arg Asp Ile Cys Ile
               225                 230                 235
   gac ttc agt gaa ctc atc tcc cag tac tct gat gag gaa gag atc cag     1131
   Asp Phe Ser Glu Leu Ile Ser Gln Tyr Ser Asp Glu Glu Glu Ile Gln
           240                 245                 250
   cat gtg gta gag gtg att caa aat tcc acg gcc aaa gtc atc gtg gtt     1179
   His Val Val Glu Val Ile Gln Asn Ser Thr Ala Lys Val Ile Val Val
       255                 260                 265
   ttc tcc agt ggc cca gat ctt gag ccc ctc atc aag gag att gtc cgg     1227
   Phe Ser Ser Gly Pro Asp Leu Glu Pro Leu Ile Lys Glu Ile Val Arg
   270                 275                 280                 285
   cgc aat atc acg ggc aag atc tgg ctg gcc agc gag gcc tgg gcc agc     1275
   Arg Asn Ile Thr Gly Lys Ile Trp Leu Ala Ser Glu Ala Trp Ala Ser
                   290                 295                 300
   tcc tcc ctg atc gcc atg cct cag tac ttc cac gtg gtt ggc ggc acc     1323
   Ser Ser Leu Ile Ala Met Pro Gln Tyr Phe His Val Val Gly Gly Thr
               305                 310                 315
   att gga ttc gct ctg aag gct ggg cag atc cca ggc ttc cgg gaa ttc     1371
   Ile Gly Phe Ala Leu Lys Ala Gly Gln Ile Pro Gly Phe Arg Glu Phe
           320                 325                 330
   ctg aag aag gtc cat ccc agg aag tct gtc cac aat ggt ttt gcc aag     1419
   Leu Lys Lys Val His Pro Arg Lys Ser Val His Asn Gly Phe Ala Lys
       335                 340                 345
   gag ttt tgg gaa gaa aca ttt aac tgc cac ctc caa gaa ggt gca aaa      1467
   Glu Phe Trp Glu Glu Thr Phe Asn Cys His Leu Gln Glu Gly Ala Lys
   350                 355                 360                 365
   gga cct tta cct gtg gac acc ttt ctg aga ggt cac gaa gaa agt ggc      1515
   Gly Pro Leu Pro Val Asp Thr Phe Leu Arg Gly His Glu Glu Ser Gly
                   370                 375                 380
   gac agg ttt agc aac agc tcg aca gcc ttc cga ccc ctc tgt aca ggg      1563
   Asp Arg Phe Ser Asn Ser Ser Thr Ala Phe Arg Pro Leu Cys Thr Gly
               385                 390                 395
   gat gag aac atc agc agt gtc gag acc cct tac ata gat tac acg cat      1611
   Asp Glu Asn Ile Ser Ser Val Glu Thr Pro Tyr Ile Asp Tyr Thr His
           400                 405                 410
   tta cgg ata tcc tac aat gtg tac tta gca gtc tac tcc att gcc cac      1659
   Leu Arg Ile Ser Tyr Asn Val Tyr Leu Ala Val Tyr Ser Ile Ala His
       415                 420                 425
   gcc ttg caa gat ata tat acc tgc tta cct ggg aga ggg ctc ttc acc      1707
   Ala Leu Gln Asp Ile Tyr Thr Cys Leu Pro Gly Arg Gly Leu Phe Thr
   430                 435                 440                 445
   aat ggc tcc tgt gca gac atc aag aaa gtt gag gcg tgg cag gtc ctg      1755
   Asn Gly Ser Cys Ala Asp Ile Lys Lys Val Glu Ala Trp Gln Val Leu
                   450                 455                 460
   aag cac cta cgg cat cta aac ttt aca aac aat atg ggg gag cag gtg      1803
   Lys His Leu Arg His Leu Asn Phe Thr Asn Asn Met Gly Glu Gln Val
               465                 470                 475
   acc ttt gat gag tgt ggt gac ctg gtg ggg aac tat tcc atc atc aac      1851
   Thr Phe Asp Glu Cys Gly Asp Leu Val Gly Asn Tyr Ser Ile Ile Asn
           480                 485                 490
   tgg cac ctc tcc cca gag gat ggc tcc atc gtg ttt aag gaa gtc ggg      1899
   Trp His Leu Ser Pro Glu Asp Gly Ser Ile Val Phe Lys Glu Val Gly
       495                 500                 505
   tat tac aac gtc tat gcc aag aag gga gaa aga ctc ttc atc aac gag      1947
   Tyr Tyr Asn Val Tyr Ala Lys Lys Gly Glu Arg Leu Phe Ile Asn Glu
   510                 515                 520                 525
   gag aaa atc ctg tgg agt ggg ttc tcc agg gag gtg ccc ttc tcc aac      1995
   Glu Lys Ile Leu Trp Ser Gly Phe Ser Arg Glu Val Pro Phe Ser Asn
                   530                 535                 540
   tgc agc cga gac tgc ctg gca ggg acc agg aaa ggg atc att gag ggg      2043
   Cys Ser Arg Asp Cys Leu Ala Gly Thr Arg Lys Gly Ile Ile Glu Gly
               545                 550                 555
   gag ccc acc tgc tgc ttt gag tgt gtg gag tgt cct gat ggg gag tat      2091
   Glu Pro Thr Cys Cys Phe Glu Cys Val Glu Cys Pro Asp Gly Glu Tyr
           560                 565                 570
   agt gat gag aca gat gcc agt gcc tgt aac aag tgc cca gat gac ttc      2139
   Ser Asp Glu Thr Asp Ala Ser Ala Cys Asn Lys Cys Pro Asp Asp Phe
       575                 580                 585
   tgg tcc aat gag aac cac acc tcc tgc att gcc aag gag atc gag ttt      2187
   Trp Ser Asn Glu Asn His Thr Ser Cys Ile Ala Lys Glu Ile Glu Phe
   590                 595                 600                 605
   ctg tcg tgg acg gag ccc ttt ggg atc gca ctc acc ctc ttt gcc gtg      2235
   Leu Ser Trp Thr Glu Pro Phe Gly Ile Ala Leu Thr Leu Phe Ala Val
                   610                 615                 620
   ctg ggc att ttc ctg aca gcc ttt gtg ctg ggt gtg ttt atc aag ttc      2283
   Leu Gly Ile Phe Leu Thr Ala Phe Val Leu Gly Val Phe Ile Lys Phe
               625                 630                 635
   cgc aac aca ccc att gtc aag gcc acc aac cga gag ctc tcc tac ctc      2331
   Arg Asn Thr Pro Ile Val Lys Ala Thr Asn Arg Glu Leu Ser Tyr Leu
           640                 645                 650
   ctc ctc ttc tcc ctg ctc tgc tgc ttc tcc agc tcc ctg ttc ttc atc      2379
   Leu Leu Phe Ser Leu Leu Cys Cys Phe Ser Ser Ser Leu Phe Phe Ile
       655                 660                 665
   ggg gag ccc cag gac tgg acg tgc cgc ctg cgc cag ccg gcc ttt ggc      2427
   Gly Glu Pro Gln Asp Trp Thr Cys Arg Leu Arg Gln Pro Ala Phe Gly
   670                 675                 680                 685
   atc agc ttc gtg ctc tgc atc tca tgc atc ctg gtg aaa acc aac cgt      2475
   Ile Ser Phe Val Leu Cys Ile Ser Cys Ile Leu Val Lys Thr Asn Arg
                   690                 695                 700
   gtc ctc ctg gtg ttt gag gcc aag atc ccc acc agc ttc cac cgc aag      2523
   Val Leu Leu Val Phe Glu Ala Lys Ile Pro Thr Ser Phe His Arg Lys
               705                 710                 715
   tgg tgg ggg ctc aac ctg cag ttc ctg ctg gtt ttc ctc tgc acc ttc      2571
   Trp Trp Gly Leu Asn Leu Gln Phe Leu Leu Val Phe Leu Cys Thr Phe
           720                 725                 730
   atg cag att gtc atc tgt gtg atc tgg ctc tac acc gcg ccc ccc tca      2619
   Met Gln Ile Val Ile Cys Val Ile Trp Leu Tyr Thr Ala Pro Pro Ser
       735                 740                 745
   agc tac cgc aac cag gag ctg gag gat gag atc atc ttc atc acg tgc      2667
   Ser Tyr Arg Asn Gln Glu Leu Glu Asp Glu Ile Ile Phe Ile Thr Cys
   750                 755                 760                 765
   cac gag ggc tcc ctc atg gcc ctg ggc ttc ctg atc ggc tac acc tgc      2715
   His Glu Gly Ser Leu Met Ala Leu Gly Phe Leu Ile Gly Tyr Thr Cys
                   770                 775                 780
   ctg ctg gct gcc atc tgc ttc ttc ttt gcc ttc aag tcc cgg aag ctg      2763
   Leu Leu Ala Ala Ile Cys Phe Phe Phe Ala Phe Lys Ser Arg Lys Leu
               785                 790                 795
   ccg gag aac ttc aat gaa gcc aag ttc atc acc ttc agc atg ctc atc      2811
   Pro Glu Asn Phe Asn Glu Ala Lys Phe Ile Thr Phe Ser Met Leu Ile
           800                 805                 810
   ttc ttc atc gtc tgg atc tcc ttc att cca gcc tat gcc agc acc tat      2859
   Phe Phe Ile Val Trp Ile Ser Phe Ile Pro Ala Tyr Ala Ser Thr Tyr
       815                 820                 825
   ggc aag ttt gtc tct gcc gta gag gtg att gcc atc ctg gca gcc agc      2907
   Gly Lys Phe Val Ser Ala Val Glu Val Ile Ala Ile Leu Ala Ala Ser
   830                 835                 840                 845
   ttt ggc ttg ctg gcg tgc atc ttc ttc aac aag atc tac atc att ctc      2955
   Phe Gly Leu Leu Ala Cys Ile Phe Phe Asn Lys Ile Tyr Ile Ile Leu
                   850                 855                 860
   ttc aag cca tcc cgc aac acc atc gag gag gtg cgt tgc agc acc gca      3003
   Phe Lys Pro Ser Arg Asn Thr Ile Glu Glu Val Arg Cys Ser Thr Ala
               865                 870                 875
   gct cac gct ttc aag gtg gct gcc cgg gcc acg ctg cgc cgc agc aac      3051
   Ala His Ala Phe Lys Val Ala Ala Arg Ala Thr Leu Arg Arg Ser Asn
           880                 885                 890
   gtc tcc cgc aag cgg tcc agc agc ctt gga ggc tcc acg gga tcc acc      3099
   Val Ser Arg Lys Arg Ser Ser Ser Leu Gly Gly Ser Thr Gly Ser Thr
       895                 900                 905
   ccc tcc tcc tcc atc agc agc aag agc aac agc gaa gac cca ttc cca      3147
   Pro Ser Ser Ser Ile Ser Ser Lys Ser Asn Ser Glu Asp Pro Phe Pro
   910                 915                 920                 925
   cag ccc gag agg cag aag cag cag cag ccg ctg gcc cta acc cag caa      3195
   Gln Pro Glu Arg Gln Lys Gln Gln Gln Pro Leu Ala Leu Thr Gln Gln
                   930                 935                 940
   gag cag cag cag cag ccc ctg acc ctc cca cag cag caa cga tct cag      3243
   Glu Gln Gln Gln Gln Pro Leu Thr Leu Pro Gln Gln Gln Arg Ser Gln
               945                 950                 955
   cag cag ccc aga tgc aag cag aag gtc atc ttt ggc agc ggc acg gtc      3291
   Gln Gln Pro Arg Cys Lys Gln Lys Val Ile Phe Gly Ser Gly Thr Val
           960                 965                 970
   acc ttc tca ctg agc ttt gat gag cct cag aag aac gcc atg gcc cac      3339
   Thr Phe Ser Leu Ser Phe Asp Glu Pro Gln Lys Asn Ala Met Ala His
       975                 980                 985
   agg aat tct acg cac cag aac tcc ctg gag gcc  cag aaa agc agc gat     3387
   Arg Asn Ser Thr His Gln Asn Ser Leu Glu Ala  Gln Lys Ser Ser Asp
   990                 995                 1000                 1005
   acg ctg acc cga cac  cag cca tta ctc ccg  ctg cag tgc ggg gaa        3432
   Thr Leu Thr Arg His  Gln Pro Leu Leu Pro  Leu Gln Cys Gly Glu
                   1010                 1015                 1020
   acg gac tta gat ctg  acc gtc cag gaa aca  ggt ctg caa gga cct        3477
   Thr Asp Leu Asp Leu  Thr Val Gln Glu Thr  Gly Leu Gln Gly Pro
                   1025                 1030                 1035
   gtg ggt gga gac cag  cgg cca gag gtg gag  gac cct gaa gag ttg        3522
   Val Gly Gly Asp Gln  Arg Pro Glu Val Glu  Asp Pro Glu Glu Leu
                   1040                 1045                 1050
   tcc cca gca ctt gta  gtg tcc agt tca cag  agc ttt gtc atc agt        3567
   Ser Pro Ala Leu Val  Val Ser Ser Ser Gln  Ser Phe Val Ile Ser
                   1055                 1060                 1065
   ggt gga ggc agc act  gtt aca gaa aac gta  gtg aat tca taa        3609
   Gly Gly Gly Ser Thr  Val Thr Glu Asn Val  Val Asn Ser
                   1070                 1075
   aatggaagga gaagactggg ctagggagaa tgcagagagg tttcttgggg tcccagggaa   3669
   gaggaatcgc cccagactcc tttcctctga ggaagaaggg ataatagaca catcaaatgc   3729
   cccgaattta gtcacaccat cttaaatgac agtgaattga cccatgttcc ctttaaaatt   3789
   aaaaaaaaga agagccttgt gtttctgtgg ttgcatttgt caaagcattg agatctccac   3849
   ggtcagattt gctgttcacc cacatctaat gtctcttcct ctgttctatc ccacccaaca   3909
   gctcagagat gaaactatgg ctttaaacta ccctccagag tgtgcagact gatgggacat   3969
   caaatttgcc accactagag ctgagagtct gaaagacaga atgtcaccag tcctgcccaa   4029
   tgccttgaca acagactgaa ttttaaatgt tcacaacata aggagaatgt atctcctcct   4089
   atttatgaaa accatatgat attttgtctc ctacctgctg ctgctattat gtaacatcca   4149
   gaaggtttgc acccctccta taccatatgt ctgcttctgt ccaggacatg atactgatgc   4209
   catgtttaga ttccaggatc acaagaatca cctcaaattg ttaggaaggg actgcataaa   4269
   ccaatgagct gtatctgtaa ttaatattcc tatatgtagc tttatcctta ggaaaatgct   4329
   tctgttgtaa tagtccatgg acaatataaa ctgaaaaatg tcagtctggt ttatataagg   4389
   cagtattatt gagctctatt tccccacccc actatcctca ctcccataag ctaagcctta   4449
   tgtgagcccc ttcagggact caagggtcca gaagtccctc ccatctctac cccaaagaat   4509
   tcctgaagcc agatccaccc tatccctgta cagagtaagt tctcaattat tggcctgcta   4569
   atagctgcta gggtaggaaa gcgtggttcc aagaaagatc caccctcaaa tgtcagagct   4629
   atgttccctc cagcagtggt attaatactg ccggtcaccc aggctctgga gccagagaga   4689
   cagaccgggg ttcaagccat ggcttcgtca tttgcaagct gagtgactgt aggcagggaa   4749
   ccttaacctc tctaagccac agcttcttca tctttaaaat aaggataata atcattcttt   4809
   cccctcagag ctcttatgtg gattaaacga gataatgtat ataaagtact ttagcctggt   4869
   acctagcaca caataagcat tcaataaata ttagttaata ttattaaaaa aaaaa        4924
<210> 2
   <211> 1078
   <212> PRT
   <213> Homo sapiens
<400> 2
   Met Ala Phe Tyr Ser Cys Cys Trp Val Leu Leu Ala Leu Thr Trp His
   1               5                   10                  15
   Thr Ser Ala Tyr Gly Pro Asp Gln Arg Ala Gln Lys Lys Gly Asp Ile
               20                  25                  30
   Ile Leu Gly Gly Leu Phe Pro Ile His Phe Gly Val Ala Ala Lys Asp
           35                  40                  45
   Gln Asp Leu Lys Ser Arg Pro Glu Ser Val Glu Cys Ile Arg Tyr Asn
       50                  55                  60
   Phe Arg Gly Phe Arg Trp Leu Gln Ala Met Ile Phe Ala Ile Glu Glu
   65                  70                  75                  80
   Ile Asn Ser Ser Pro Ala Leu Leu Pro Asn Leu Thr Leu Gly Tyr Arg
                   85                  90                  95
   Ile Phe Asp Thr Cys Asn Thr Val Ser Lys Ala Leu Glu Ala Thr Leu
               100                 105                 110
   Ser Phe Val Ala Gln Asn Lys Ile Asp Ser Leu Asn Leu Asp Glu Phe
           115                 120                 125
   Cys Asn Cys Ser Glu His Ile Pro Ser Thr Ile Ala Val Val Gly Ala
       130                 135                 140
   Thr Gly Ser Gly Val Ser Thr Ala Val Ala Asn Leu Leu Gly Leu Phe
   145                 150                 155                 160
   Tyr Ile Pro Gln Val Ser Tyr Ala Ser Ser Ser Arg Leu Leu Ser Asn
                   165                 170                 175
   Lys Asn Gln Phe Lys Ser Phe Leu Arg Thr Ile Pro Asn Asp Glu His
               180                 185                 190
   Gln Ala Thr Ala Met Ala Asp Ile Ile Glu Tyr Phe Arg Trp Asn Trp
           195                 200                 205
   Val Gly Thr Ile Ala Ala Asp Asp Asp Tyr Gly Arg Pro Gly Ile Glu
       210                 215                 220
   Lys Phe Arg Glu Glu Ala Glu Glu Arg Asp Ile Cys Ile Asp Phe Ser
   225                 230                 235                 240
   Glu Leu Ile Ser Gln Tyr Ser Asp Glu Glu Glu Ile Gln His Val Val
   245 250 255
   Glu Val Ile Gln Asn Ser Thr Ala Lys Val Ile Val Val Phe Ser Ser
   260 265 270
   Gly Pro Asp Leu Glu Pro Leu Ile Lys Glu Ile Val Arg Arg Asn Ile
   275 280 285
   Thr Gly Lys Ile Trp Leu Ala Ser Glu Ala Trp Ala Ser Ser Ser Leu
   290 295 300
   Ile Ala Met Pro Gln Tyr Phe His Val Val Gly Gly Thr Ile Gly Phe
   305 310 315 320
   Ala Leu Lys Ala Gly Gln Ile Pro Gly Phe Arg Glu Phe Leu Lys Lys
   325 330 335
   Val His Pro Arg Lys Ser Val His Asn Gly Phe Ala Lys Glu Phe Trp
   340 345 350
   Glu Glu Thr Phe Asn Cys His Leu Gln Glu Gly Ala Lys Gly Pro Leu
   355 360 365
   Pro Val Asp Thr Phe Leu Arg Gly His Glu Glu Ser Gly Asp Arg Phe
   370 375 380
   Ser Asn Ser Ser Thr Ala Phe Arg Pro Leu Cys Thr Gly Asp Glu Asn
   385 390 395 400
   Ile Ser Ser Val Glu Thr Pro Tyr Ile Asp Tyr Thr His Leu Arg Ile
   405 410 415
   Ser Tyr Asn Val Tyr Leu Ala Val Tyr Ser Ile Ala His Ala Leu Gln
   420 425 430
   Asp Ile Tyr Thr Cys Leu Pro Gly Arg Gly Leu Phe Thr Asn Gly Ser
   435 440 445
   Cys Ala Asp Ile Lys Lys Val Glu Ala Trp Gln Val Leu Lys His Leu
   450 455 460
   Arg His Leu Asn Phe Thr Asn Asn Met Gly Glu Gln Val Thr Phe Asp
   465 470 475 480
   Glu Cys Gly Asp Leu Val Gly Asn Tyr Ser Ile Ile Asn Trp His Leu
                   485                 490                 495
   Ser Pro Glu Asp Gly Ser Ile Val Phe Lys Glu Val Gly Tyr Tyr Asn
               500                 505                 510
   Val Tyr Ala Lys Lys Gly Glu Arg Leu Phe Ile Asn Glu Glu Lys Ile
           515                 520                 525
   Leu Trp Ser Gly Phe Ser Arg Glu Val Pro Phe Ser Asn Cys Ser Arg
       530                 535                 540
   Asp Cys Leu Ala Gly Thr Arg Lys Gly Ile Ile Glu Gly Glu Pro Thr
   545                 550                 555                 560
   Cys Cys Phe Glu Cys Val Glu Cys Pro Asp Gly Glu Tyr Ser Asp Glu
                   565                 570                 575
   Thr Asp Ala Ser Ala Cys Asn Lys Cys Pro Asp Asp Phe Trp Ser Asn
               580                 585                 590
   Glu Asn His Thr Ser Cys Ile Ala Lys Glu Ile Glu Phe Leu Ser Trp
           595                 600                 605
   Thr Glu Pro Phe Gly Ile Ala Leu Thr Leu Phe Ala Val Leu Gly Ile
       610                 615                 620
   Phe Leu Thr Ala Phe Val Leu Gly Val Phe Ile Lys Phe Arg Asn Thr
   625                 630                 635                 640
   Pro Ile Val Lys Ala Thr Asn Arg Glu Leu Ser Tyr Leu Leu Leu Phe
                   645                 650                 655
   Ser Leu Leu Cys Cys Phe Ser Ser Ser Leu Phe Phe Ile Gly Glu Pro
               660                 665                 670
   Gln Asp Trp Thr Cys Arg Leu Arg Gln Pro Ala Phe Gly Ile Ser Phe
           675                 680                 685
   Val Leu Cys Ile Ser Cys Ile Leu Val Lys Thr Asn Arg Val Leu Leu
       690                 695                 700
   Val Phe Glu Ala Lys Ile Pro Thr Ser Phe His Arg Lys Trp Trp Gly
   705                 710                 715                 720
   Leu Asn Leu Gln Phe Leu Leu Val Phe Leu Cys Thr Phe Met Gln Ile
   725 730 735
   Val Ile Cys Val Ile Trp Leu Tyr Thr Ala Pro Pro Ser Ser Tyr Arg
   740 745 750
   Asn Gln Glu Leu Glu Asp Glu Ile Ile Phe Ile Thr Cys His Glu Gly
   755 760 765
   Ser Leu Met Ala Leu Gly Phe Leu Ile Gly Tyr Thr Cys Leu Leu Ala
   770 775 780
   Ala Ile Cys Phe Phe Phe Ala Phe Lys Ser Arg Lys Leu Pro Glu Asn
   785 790 795 800
   Phe Asn Glu Ala Lys Phe Ile Thr Phe Ser Met Leu Ile Phe Phe Ile
   805 810 815
   Val Trp Ile Ser Phe Ile Pro Ala Tyr Ala Ser Thr Tyr Gly Lys Phe
   820 825 830
   Val Ser Ala Val Glu Val Ile Ala Ile Leu Ala Ala Ser Phe Gly Leu
   835 840 845
   Leu Ala Cys Ile Phe Phe Asn Lys Ile Tyr Ile Ile Leu Phe Lys Pro
   850 855 860
   Ser Arg Asn Thr Ile Glu Glu Val Arg Cys Ser Thr Ala Ala His Ala
   865 870 875 880
   Phe Lys Val Ala Ala Arg Ala Thr Leu Arg Arg Ser Asn Val Ser Arg
   885 890 895
   Lys Arg Ser Ser Ser Leu Gly Gly Ser Thr Gly Ser Thr Pro Ser Ser
   900 905 910
   Ser Ile Ser Ser Lys Ser Asn Ser Glu Asp Pro Phe Pro Gln Pro Glu
   915 920 925
   Arg Gln Lys Gln Gln Gln Pro Leu Ala Leu Thr Gln Gln Glu Gln Gln
   930 935 940
   Gln Gln Pro Leu Thr Leu Pro Gln Gln Gln Arg Ser Gln Gln Gln Pro
   945 950 955 960
   Arg Cys Lys Gln Lys Val Ile Phe Gly Ser Gly Thr Val Thr Phe Ser
   965 970 975
   Leu Ser Phe Asp Glu Pro Gln Lys Asn Ala Met Ala His Arg Asn Ser
   980 985 990
   Thr His Gln Asn Ser Leu Glu Ala Gln Lys Ser Ser Asp Thr Leu Thr
   995 1000 1005
   Arg His Gln Pro Leu Leu Pro Leu Gln Cys Gly Glu Thr Asp Leu
   1010 1015 1020
   Asp Leu Thr Val Gln Glu Thr Gly Leu Gln Gly Pro Val Gly Gly
   1025 1030 1035
   Asp Gln Arg Pro Glu Val Glu Asp Pro Glu Glu Leu Ser Pro Ala
   1040 1045 1050
   Leu Val Val Ser Ser Ser Gln Ser Phe Val Ile Ser Gly Gly Gly
   1055 1060 1065
   Ser Thr Val Thr Glu Asn Val Val Asn Ser
   1070 1075
<210> 3
   <211> 49
   <212> DNA
   <213> Artificial
<220>
   <223> primer
<400> 3
   actaatacga ctcactatag ggaccatggc attttatagc tgctgctgg 49
<210> 4
   <211> 29
   <212> DNA
   <213> Artificial
<220>
   <223> primer
<400> 4
   ttatgaattc actacgtttt ctgtaacag 29